# EUROPÄISCHE PATENTSCHRIFT

(11) **EP 2 463 127 B1**
(45) Veröffentlichungstag und Bekanntmachung des Hinweises auf die Patenterteilung: **28.03.2018**
(21) Anmeldenummer: 11008395.3
(22) Anmeldetag: 19.10.2011
(51) Int. Cl.: B60G 17/052, B60T 17/02, F15B 11/16, F15B 13/02, B60T 13/66, B60T 13/68, F15B 11/06

(54) **Druckluftversorgungssystem für wenigstens einen ersten Druckluftverbraucherkreis, Druckluftsystem und Verfahren zur Steuerung eines Druckluftversorgungssystems und/oder zur Steuerung eines Druckluftsystems**
Compressed air supply system for at least one initial compressed air consumer circuit, compressed air system and method for controlling a compressed air supply system and/or controlling a compressed air system
Système d'alimentation en air comprimé pour au moins un premier circuit de consommation à air comprimé, système à air comprimé et procédé de commande d'un système d'alimentation en air comprimé et/ou de commande d'un système à air comprimé

(30) Priorität: 09.12.2010 DE 102010053985
(43) Veröffentlichungstag der Anmeldung: 13.06.2012
(73) Patentinhaber: WABCO GmbH, 30453 Hannover (DE)
(72) Erfinder: Diekmeyer, Heinrich, 30890 Barsinghausen (DE)

(56) Entgegenhaltungen:
- DE-A1- 10 323 037
- DE-A1- 10 357 762
- DE-A1- 19 515 895
- DE-A1-102009 029 898

## Beschreibung

Druckluftversorgungssystem für wenigstens einen ersten Druckluftverbraucherkreis, Druckluftsystem und Verfahren zur Steuerung eines Druckluftversorgungssystems und/oder zur Steuerung eines Druckluftsystems

Die Erfindung betrifft ein Druckluftversorgungssystem für wenigstens einen ersten Druckluftverbraucherkreis gemäß dem Oberbegriff des Anspruchs 1. Weiter betrifft die Erfindung ein Druckluftsystem mit einem solchen Druckluftversorgungssystem nach dem Oberbegriff des Anspruchs 13. Die Erfindung betrifft auch ein Verfahren zur Steuerung eines Druckluftversorgungssystems und/oder zur Steuerung eines Druckluftsystems gemäß dem Oberbegriff des Anspruchs 15.

Ein Druckluftsystem der eingangs genannten Art, das ein Lufttrocknerteil oder dergleichen Druckluftaufbereitungsanlage aufweisen kann, ist aus dem Stand der Technik grundsätzlich bekannt. Die Verteilerleitung eines daran angeschlossenen Druckluftversorgungssystems bildet nur einen Teil einer Druckluftverteilung zur Verteilung der Druckluft an weitere Verbraucherkreise. Die Druckluftverteilung weist - zur priorisierenden Verteilung von Druckluft - eine erste Prioritätsventilanordnung auf, die zwischen der ersten Druckluftleitung und der Verteilerleitung angeschlossen ist. Insbesondere betrifft die Erfindung vorliegend ein Druckluftversorgungssystem für wenigstens einen ersten Druckluftverbraucherkreis in Form eines Luftfedersystems für ein Fahrzeug. Insbesondere betrifft die Erfindung vorliegend ein Druckluftsystem, bei dem der weitere Verbraucherkreis wenigstens einen Bremskreis aufweist.

DE 100 04 091 C2 offenbart eine Fahrzeugdruckluftversorgungseinrichtung mit einem Kompressor und einem Mehrkreisschutzventil, dessen mit Druckluftbehältern versehene Kreise über eine Versorgungsleitung mit Druckluft versorgt werden, wobei die Druckluft zur Betätigung einer Bremse eines Fahrzeugs vorgesehen ist.

WO 2006/074722 A1 der Anmelderin offenbart eine Druckmittelanlage mit einer Druckmittelversorgungseinrichtung zur Versorgung von Vorratsbehältern mit Druckmittel, so dass eine Entnahme von Druckmittel aus den Vorratsbehältern durch eine Verbrauchseinrichtung in Form einer Bremsanlage möglich ist.

Eine Druckluftverteilung ist bei solchen insbesondere auf Bremskreise ausgelegten Druckluftversorgungseinrichtungen noch verbesserbar. Wünschenswert ist eine Vorrichtung und ein Verfahren, bei dem eine von einer Druckluftaufbereitungsanlage oder dergleichen Druckluftaufbereitungseinheit zur Verfügung gestellte Druckluft in verbesserter Weise auf einen ersten Druckluftverbraucherkreis und weitere Verbraucherkreise verteilbar ist.

An dieser Stelle setzt die Erfindung an, deren Aufgabe es ist, ein Druckluftversorgungssystem und ein Druckluftsystem sowie ein Verfahren zur Steuerung der Systeme anzugeben, bei denen eine verbesserte Verteilung von zur Verfügung stehender Druckluft möglich ist. Insbesondere soll eine Verteilung von zur Verfügung stehender Druckluft auf einen ersten Druckluftverbraucherkreis einerseits und weitere Verbraucherkreise andererseits - insbesondere eine Luftfederanlage einerseits und Bremskreise andererseits - möglich sein. Insbesondere soll eine verbesserte Funktion und/oder ein verbessertes Steuerungsverhalten für ein System bzw. ein Verfahren zur Verfügung gestellt werden.

Die Aufgabe betreffend die Vorrichtung wird durch ein Druckluftversorgungssystem der eingangs genannten Art gelöst, bei dem erfindungsgemäß auch die Merkmale des kennzeichnenden Teils des Anspruchs 1 vorgesehen sind. Die Erfindung führt auch auf ein Druckluftsystem mit den Merkmalen des Anspruchs 13. Betreffend das Verfahren wird die Aufgabe durch die Erfindung mit einem Verfahren der eingangs genannten Art gelöst, bei dem erfindungsgemäß auch die Merkmale des kennzeichnenden Teils des Anspruchs 15 vorgesehen sind.

Die Erfindung geht von der Überlegung aus, dass es grundsätzlich vorteilhaft ist, zur Verfügung stehende Druckluft - beispielsweise aus einem Lufttrocknerteil oder dergleichen Druckluftaufbereitungsanlage - sowohl für einen ersten Druckluftverbraucherkreis, insbesondere ein Luftfedersystem, als auch weitere Verbraucherkreise, insbesondere wenigsten einen Bremskreis, zu nutzen. Die Erfindung geht darüber hinaus von der Überlegung aus, dass es grundsätzlich vorteilhaft ist, die Druckluft dem ersten Druckluftverbraucherkreis bzw. den weiteren Verbraucherkreisen möglichst zeiteffektiv mit vergleichsweise geringem Druckverlust zur Verfügung zu stellen. Die aus dem Stand der Technik bekannten Maßnahmen sind bezüglich dieser Anforderungen unbefriedigend, da diese regelmäßig ein unkoordiniertes Auffüllen von Druckluftbehältern vorsehen, zum Teil auf vergleichsweise hohe Drücke. Dies kann jedoch die Druckluftbetätigung der Verbraucher im ersten Druckluftverbraucherkreis bzw. in weiteren Verbraucherkreisen verzögern. Die Erfindung hat erkannt, dass eine verbesserte Ausnutzung und Koordination der zur Verfügung stehenden Druckluft mit einer verbesserten Kreisabsicherung möglich ist. Mittels einer ersten Prioritätsventilanordnung zwischen der ersten Druckluftleitung und der Verteilerleitung ist es in besonders vorteilhafter Weise möglich, Druckluft auf einen ersten Druckluftverbraucherkreis bzw. weitere Verbraucherkreise zu verteilen. Insbesondere mit einer pneumatischen Betätigung der ersten Prioritätsanordnung hat sich dieser Ansatz als vergleichsweise effektiv und als selbst bei hohen Luftdrücken realisierbar erwiesen. Es hat sich auch gezeigt, dass im Normalbetrieb vorteilhaft nicht auf einen Druckluftaustausch zwischen dem ersten Druckluftverbraucherkreis einerseits und den weiteren Verbraucherkreisen andererseits verzichtet werden muss.

In der von der Anmelderin hinterlegten und nicht veröffentlichen deutschen Anmeldung mit dem Anmeldezeichen 10 2009 029 898.3 ist ein eingangs genanntes Druckluftversorgungssystem grundsätzlich beschrieben worden. Dieses erweist sich als noch verbesserbar. Insbesondere hat sich gezeigt, dass dieses unter Wahrung der vorgenannten Vorteile konstruktiv zu vereinfachen ist. Insbesondere hat sich gezeigt, dass darüber hinaus ein Druckluftversorgungssystem und Druckluftsystem hinsichtlich einer flexiblen Einsetzbarkeit und einer zeiteffektiven Drucklufthandhabung noch verbesserbar ist. Insbesondere hat sich gezeigt, dass das in DE 10 2009 029 898.3 angemeldete und beschriebene Konzept in einheitlicher Auslegung weitergebildet werden kann. Das Konzept kann für unterschiedliche Komponentenanbindung, insbesondere unterschiedliche Ausführung eines ersten Druckluftverbraucherkreises wie beispielsweise einer Luftfederanlage, als auch für weitere Verbraucherkreise wie beispielsweise einen Bremskreis geeignet sein.

Die Erfindung hat erkannt, dass es erfindungsgemäß besonders vorteilhaft ist, eine zweite Prioritätsventilanordnung vorzusehen, die zwischen der ersten Druckluftleitung und einem dem ersten Druckluftverbraucherkreis zugeordneten ersten Luftbehälter angeschlossen ist. Dieses die DE 10 2009 029 898.3 weiterbildende Konzept hat sich als besonders flexibel erwiesen. Selbst für unterschiedliche erste Druckluftverbraucherkreise -insbesondere mit Luftbehälter oder ohne Luftbehälter oder mit einer unterschiedlichen Anzahl von Luftbehältern- kann ein einheitliches Druckluftversorgungssystem unabhängig von der Auslegung des ersten Druckluftverbraucherkreises zur Verfügung gestellt werden. Das Konzept der Erfindung hat erkannt, dass die zweite Prioritätsventilanordnung zwischen der ersten Druckluftleitung und dem ersten Druckluftverbraucherkreis in vorteilhafter Weise genutzt werden kann, eine Druckluftverteilung auf den ersten Druckluftverbraucherkreis einerseits bzw. die weiteren Verbraucherkreise andererseits zusätzlich zu verbessern.

Ein Druckluftsystem kann vorteilhaft mit an einem ein Druckluftversorgungssystem angeschlossenen ersten Druckluftverbraucherkreis -insbesondere in Form eines Luftfedersystems mit wenigstens einem Luftfederventil und wenigstens einem Balg sowie einem ersten Luftbehälter- gebildet sein. An das Druckluftversorgungssystem kann weiter eine Druckluftaufbereitungsanlage -insbesondere wenigstens umfassend ein Lufttrocknerteil- angeschlossen sein, die einen Kompressor enthält, der insbesondere an einen Eingangsanschluss des Lufttrocknerteils angeschlossen sein kann.

Vorteilhaft ermöglicht das Konzept der Erfindung darüber hinaus eine konstruktive Vereinfachung unter Bauteilreduzierung im Vergleich zu bisher beschriebenen Lösungen. So kann gemäß einem weiterbildenden Konzept der Erfindung eine Leitungsführung, insbesondere eine Leitungsanzahl, als auch eine Ventilanordnung, insbesondere Ventilzahl, reduziert werden.

Vorteilhafte Weiterbildungen der Erfindung sind den Unteransprüche zu entnehmen und geben im Einzelnen vorteilhafte Möglichkeiten an, dass oben erläuterte Konzept im Rahmen der Aufgabenstellung sowie hinsichtlich weiterer Vorteile zu realisieren.

Im folgenden beziehen sich die Begrifflichkeiten "eingangsseitig" und "ausgangsseitig" auf eine Befüllrichtung zum Befüllen eines Druckluftverbraucherkreises mit Druckluft aus einer Druckluftaufbereitungsanlage.

Vorteilhaft ist die erste Prioritätsventilanordnung in einer zwischen der ersten Druckluftleitung und der Verteilerleitung angeschlossenen ersten Verbindungsleitung angeschlossen.
Besonders vorteilhaft weist die erste Verbindungsleitung einen eingangsseitigen Anschluss an ein Lufttrocknerteil und/oder an die erste Druckluftleitung auf. Vorteilhaft weist die erste Verbindungsleitung ausgangsseitig einen Anschluss an die Verteilerleitung auf.

Vorteilhaft ist die zweite Prioritätsventilanordnung in einer zweiten Verbindungsleitung angeschlossen, die zwischen der ersten Druckluftleitung und dem ersten Druckluftverbraucherkreis zugeordneten ersten Luftbehälter angeschlossen ist. Vorteilhaft weist die zweite Verbindungsleitung einen Anschluss an die erste Druckluftleitung und/oder den ersten Druckluftverbraucherkreis auf. Vorteilhaft weist die zweite Verbindungsleitung einen Anschluss auf, an den mittelbar oder unmittelbar der erste Luftbehälter angeschlossen werden kann. Mit besonderem Ventil versehen ist die zweite Prioritätsventilanordnung unmittelbar in der zweiten Verbindungsleitung angeschlossen. Insbesondere ist die zweite Verbindungsleitung unmittelbar zwischen der ersten Druckluftleitung und dem ersten Luftbehälter angeschlossen.

Mit Vorteil kann die erste und/oder zweite Prioritätsventilanordnung in einem separaten an das Druckluftversorgungssystem lösbar anschließbaren Prioritätsgerät integriert werden.

Insbesondere ist die zweite Verbindungsleitung Teil eines separaten, an das Druckluftversorgungssystem lösbar anschließbaren Prioritätsgerätes. D. h. insbesondere in einer ersten Variante kann vorteilhaft, von den Prioritätsventilanordnungen, nur die zweite Prioritätsventilanordnung Teil des Prioritätsgerätes sein.

Besonders vorteilhaft ist die erste Verbindungsleitung Teil eines separaten an das Druckluftversorgungssystem lösbar anschließbaren Prioritätsgerätes. D. h. in einer zweiten Variante hat es sich insbesondere als vorteilhaft erwiesen, dass sowohl die zweite als auch die erste Prioritätsventilanordnung Teil des Prioritätsgerätes sind.

Unter einem Prioritätsgerät ist vorliegend insbesondere eine Baueinheit wenigstens mit der zweiten Prioritätsventilanordnung, einem Trenn-Rückschlagventil und mit der zweiten Verbindungsleitung sowie, wenigsten in Teilen, mit der ersten Druckluftleitung zu verstehen, die vorzugsweise in einem Gehäuse integriert ist. Vorteilhaft kann mit einem Prioritätsgerät beider Varianten das Druckluftversorgungssystem einheitlich ausgeführt werden und gleichwohl flexibel eingesetzt werden für unterschiedliche erste Druckluftverbraucherkreise, insbesondere für unterschiedliche Luftfedersysteme. Insbesondere betrifft dies Luftfedersysteme mit einer variablen Anzahl von ersten Luftbehältern oder auch ein Luftfedersystem ohne einen ersten Luftbehälter.

Im Rahmen einer besonders bevorzugten Weiterbildung ist ein Trenn-Rückschlagventil Teil des Prioritätsgerätes. Vorzugsweise ist das Trenn-Rückschlagventil zwischen einem Zuführungsanschluss und einem ersten und/oder zweiten Abführungsanschluss des Prioritätsgerätes angeschlossen. Insbesondere ist das Trenn-Rückschlagventil in der ersten Druckluftleitung angeschlossen.

Das Prioritätsgerät gemäß der ersten Variante kann vorteilhaft zwischen einem Lufttrocknerteil oder dergleichen Druckluftaufbereitungsanlage und -soweit vorhanden- dem ersten Luftbehälter sowie dem ersten Druckluftverbraucherkreis eines Fahrzeugs angeschlossen sein. Vorteilhaft kann das Prioritätsgerät gemäß der ersten Variante an ein Luftfedersystem und dort separat lösbar anschließbar sein. Das Prioritätsgerät der ersten Variante hat insbesondere drei Anschlüsse.

Im Rahmen einer zweiten Variante kann das Prioritätsgerät auch die erste Prioritätsventilanordnung aufweisen. Vorteilhaft ist die erste Prioritätsventilanordnung Teil des Prioritätsgerätes und zwischen dem Zuführungsanschluss und einem dritten Abführungsanschluss angeschlossen. Gemäß dieser Variante weist das Prioritätsgerät vorteilhaft vier Anschlüsse auf. Die Anschlüsse weisen vorteilhaft einen eingangsseitigen Zuführungsanschluss zu einem Lufttrocknerteil und einen dritten ausgangsseitigen Abführungsanschluss zu der Verteilerleitung auf. Der eingangsseitige Zuführungsanschluss und der dritte ausgangsseitige Abführungsanschluss sind vorteilhaft Anschlüsse der ersten Verbindungsleitung.

Insgesamt hat es sich als vorteilhaft erwiesen, dass wenigstens die zweite Prioritätsventilanordnung -vorzugsweise die erste und die zweite Prioritätsventilanordnung- Teil des separaten an das Druckluftversorgungssystem lösbar anschließbaren Prioritätsgerätes ist.

Vorteilhaft weist das Prioritätsgerät wenigstens einen Zuführungsanschluss auf, der als Anschluss an ein Lufttrocknerteil und/oder an die erste Prioritätsventilanordnung ausgebildet ist. Der Zuführungsanschluss kann dabei als ein einziger Zuführungsanschluss an das Lufttrocknerteil gebildet sein. Es kann auch ein weiterer Zuführungsanschluss an die erste Prioritätsventilanordnung gebildet sein. Besonders vorteilhaft ist der Zuführungsanschluss eingangsseitig an die erste Druckluftleitung und/oder eine erste Verbindungsleitung angeschlossen.

Darüber hinaus weist das Prioritätsgerät der zweiten Variante wie das der ersten Variante vorteilhaft einen ersten, ausgangsseitigen Abführungsanschluss zum ersten Druckluftverbraucherkreis auf. Der erste ausgangsseitige Abführungsanschluss ist insbesondere als Anschluss in der ersten Druckluftleitung gebildet. Vorteilhaft ist der erste Abführungsanschluss ausgangsseitig an die erste Druckluftleitung angeschlossen. Insbesondere ist an die erste Druckluftleitung ein erster Druckluftverbraucherkreis anschließbar.

Vorteilhaft weist das Prioritätsgerät gemäß der ersten und zweiten Variante einen zweiten ausgangsseitigen Abführungsanschluss zu dem ersten Luftbehälter auf. Vorteilhaft ist der zweite ausgangsseitige Abführungsanschluss als Anschluss in der zweiten Verbindungsleitung gebildet bzw. an die zweite Verbindungsleitung anschließbar ausgebildet.

Weitere vorteilhafte Weiterbildungen der Erfindung sind -insbesondere hinsichtlich der Auslegung der Prioritätsventilanordnungen- den Unteransprüchen zu entnehmen und geben im Einzelnen vorteilhafte Möglichkeiten an, eine Prioritätsventilanordnung im Rahmen der Aufgabenstellung sowie hinsichtlich weiterer Vorteile zu realisieren. Insbesondere wird hinsichtlich der konstruktiven Ausführung einer Prioritätsventilanordnung generell, sowie vorliegend insbesondere der ersten und/oder zweiten Prioritätsventilanordnung, der Offenbarungsgehalt der DE 10 2009 029 898.3 hiermit durch Zitat vollumfänglich in den Offenbarungsgehalt der vorliegenden Anmeldung aufgenommen.

Unter Weiterbildung des oben erläuterten Konzepts hat es sich als vorteilhaft erwiesen, dass die erste und/oder zweite Prioritätsventilanordnung ein Überströmventil aufweist. Vorzugsweise ist das Überströmventil für eine optionale Rückströmung ausgebildet oder ergänzt. Grundsätzlich kann eine Rückströmung auf verschiedenste Weise, je nach Zweckmäßigkeit realisiert sein. Vorteilhaft weist die erste und/oder zweite Prioritätsventilanordnung ein Überströmventil mit einer das Überströmventil unmittelbar umgehenden Bypassleitung auf, wobei die Bypassleitung ein zum Überströmventil pneumatisch parallel geschaltetes Bypass-Rückschlagventil aufweist. Mit Vorteil versehen ist das Bypass-Rückschlagventil im Gegenstrom zum Überströmventil durchströmbar. Insbesondere weist das Bypass-Rückschlagventil eine Durchlassrichtung auf, die entgegengesetzt zur Durchlassrichtung des Überströmventils ist. Vorteilhaft erlaubt diese Auslegung bei Bedarf ein Füllen des ersten Druckluftverbraucherkreises, insbesondere des Luftfedersystems, aus einem weiteren Verbraucherkreis, insbesondere einem Bremskreis, und/oder dem ersten Luftbehälter. Anders ausgedrückt kann die Rückströmung zum Zwecke eines Druckausgleichs zwischen dem ersten Druckluftverbraucherkreis einerseits und weiteren Verbraucherkreisen und/oder dem ersten Luftbehälter andererseits genutzt werden.

Vorteilhaft ist eine Rückströmung begrenzt, insbesondere schließt das Überströmventil bei kleinen Balgdrücken, sodass eine entsprechende Rückströmung unterbrochen wird.

Besonders vorteilhaft ist ein Überströmventil der ersten und/oder zweiten Prioritätsventilanordnung weitgehend frei von einer Hysterese ausgebildet. Eine praktisch hysteresefreie Auslegung eines Schaltvorgangs bei einem Überströmventil führt zu einer Prioritätsventilanordnung mit einem besonders zeiteffektiven Schaltvorgang. Insbesondere hat sich eine in begrenztem Rahmen kleine oder auch negative Hysterese als vorteilhaft erwiesen. Vorteilhaft wird insbesondere ein zu frühzeitiges Öffnen einer Prioritätsventilanordnung verhindert. Im Ergebnis wird durch die weitgehend hysteresefreie Auslegung vermieden, dass ein an ein Prioritätsventil angeschlossener Verbraucherkreis -insbesondere ein an die zweite Prioritätsventilanordnung gegebenenfalls angeschlossener erster Luftbehälter- zeitaufwändig und unter Verbrauch von Druckluft aufgefüllt wird, bevor zu bevorzugende Verbraucher -wie beispielsweise ein Bremskreis oder eine Luftfeder- mit Druckluft versorgt werden. Insgesamt kann eine Prioritätsventilanordnung gemäß dieser Weiterbildung besonders exakt schalten.

Bevorzugt weist die erste und/oder zweite Prioritätsventilanordnung einen im Vergleich zum Arbeitsdruck des ersten Druckluftverbraucherkreises höheren Öffnungsdruck auf. Eine druckluftbereitstellende Quelle, insbesondere ein Kompressor oder dergleichen Verdichter beispielsweise in einem Lufttrocknerteil, wird so in die Lage versetzt, mit Priorität den ersten Druckluftverbraucherkreis mit Druckluft zu versorgen. Dies führt mit Vorteil versehen zu einer vergleichsweise bevorzugten Befüllung von Bälgen einer Luftfeder bzw. Bespeisung des Luftfedersystems.

In besonders vorteilhafter Weise ist vorgesehen, dass die zweite Prioritätsventilanordnung einen im Vergleich zum Maximaldruck des ersten Druckluftverbraucherkreises höheren Öffnungsdruck aufweist. Mit Vorteil versehen unterstützt dies weiter die bevorzugte Bespeisung des ersten Druckluftverbraucherkreises. Insbesondere wird die Befüllung eines Balges einer Luftfeder unterstützt bevor der erste Luftbehälter befüllt wird.

Im Rahmen einer weiteren besonders bevorzugten Weiterbildung ist vorgesehen, dass ein Trenn-Rückschlagventil zwischen dem Eingang der ersten Prioritätsventilanordnung und einem Steuerventil des ersten Druckluftverbraucherkreises angeschlossen ist. Insbesondere ist das Trenn-Rückschlagventil in der ersten Druckluftleitung angeschlossen. Dies hat den Vorteil, dass der erste Luftbehälter -wenn denn einmal aufgefüllt- besonders zuverlässig einen maximalen Druck halten kann. So ist es in verbesserter Weise möglich, einen vergleichsweise hohen Versorgungsdruck den Bälgen zur Verfügung zu stellen.

Bevorzugt weist die zweite Prioritätsventilanordnung einen im Vergleich zur ersten Prioritätsventilanordnung höheren Öffnungsdruck auf. Insbesondere wird damit erreicht, dass bereits beim ersten Speisen eines Verbraucherkreises, ein Bremsbehälter vergleichsweise schnell befüllt werden kann, ohne dass gleichzeitig auch ein Luftfederbehälter befüllt wird.

Hinsichtlich des Verfahrens sind zur Lösung der Aufgabe erfindungsgemäß die Schritte vorgesehen:
- Speisen des ersten Druckluftverbraucherkreises mit Druckluft, insbesondere bevorzugtes bzw. zuerst ausgeführtes Speisen des ersten Druckluftverbraucherkreises mit Druckluft;
- Auffüllen zumindest eines dem ersten Druckluftverbraucherkreis zugeordneten ersten Luftbehälters mit Druckluft, insbesondere erst nach dem vorgenannten Speise-Schritt ausgeführtes Auffüllen des ersten Druckluftverbraucherkreises. Das Auffüllen des ersten Luftbehälters erfolgt über die zweite Prioritätsventilanordnung erst nach Erreichen eines vorgegebenen Drucks im ersten Druckluftverbraucherkreis und/oder in den weiteren Verbraucherkreisen und unmittelbar aus der zum Speisen des Druckluftverbraucherkreises vorgesehenen Druckluft.

Vorteilhaft ist vorgesehen, dass ein Luftfederventil des ersten Druckluftverbraucherkreises von einer Fahrzeugsteuerung ein Freigabesignal zum Öffnen erhält, insbesondere für den Fall einer ausreichenden Speisung eines Bremskreises mit Druckluft. Besonders vorteilhaft ist eine Steuereinheit vorgesehen, ein Freigabesignal an eine Elektronik der Luftfederung zu senden. Das System ist damit in der Lage, eine Luftentnahme der Luftfederung flexibel so zu steuern, dass ein Bremsvorgang nicht beeinträchtigt wird bzw. wenn das Fahrzeug steht, das Luftfedersystem bevorzugt mit Druckluft versorgt wird.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

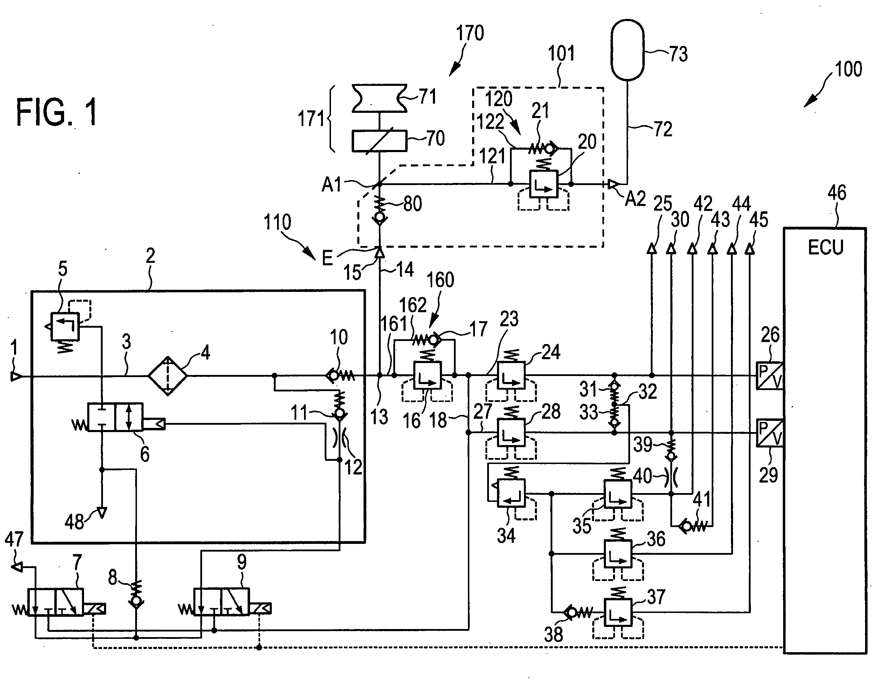

Fig. 1 eine erste bevorzugte Ausführungsform eines Druckluftsystems, das eine Druckluftaufbereitungsanlage in Form eines Lufttrocknerteils, einen ersten Druckluftverbraucherkreis in Form eines Luftfedersystems, eine Druckluftverteilung für wenigsten einen Bremskreis, eine ECU und -im Rahmen einer Weiterbildung des Konzepts der Erfindung- ein Druckluftversorgungssystem mit einem separat an das Luftfedersystem anschließbaren Prioritätsgerät aufweist, an welches wiederum ein dem Luftfedersystem zugeordneter Luftbehälter anschließbar ist - die Druckluftaufbereitungsanlage (ohne) Prioritätsgerät, kann eine Baueinheit sein, die ECAS genannt wird;
Fig. 2 eine weitere Ausführungsform eines Druckluftsystems, bei dem in Abwandlung zu der Ausführungsform der Fig. 1 das separate Prioritätsgerät neben einer zweiten Prioritätsventilanordnung und einem Trenn-Rückschlagventil auch eine erste Prioritätsventilanordnung umfasst;
Fig. 3 eine beispielhafte bevorzugte Ausführungsform einer Prioritätsventilanordnung mit Rückströmung, die beispielsweise als erste oder zweite Prioritätsventilanordnung der Ausführungsform der Fig. 1 oder Fig. 2 einsetzbar ist;
Fig. 4 ein Ablaufdiagramm einer bevorzugten Ausführungsform eines Verfahrens zur Steuerung eines Druckluftsystems beispielsweise der Fig. 1 oder Fig. 2.

Für identische oder ähnliche Teile oder Teile identischer oder ähnlicher Funktion sind vorliegend der Einfachheit halber gleiche Bezugszeichen verwendet. Insbesondere wird hinsichtlich Ergänzungen auf die im Wesentlichen gleiche Bezugszeichen verwendende DE 10 2009 029 898.3 verwiesen, deren Offenbarungsgehalt hiermit durch Zitat vollständig in den Offenbarungsgehalt der vorliegenden Anmeldung aufgenommen ist.

Unter "ausgangsseitig" ist vorliegend immer eine der Förderrichtung eines Kompressors abgewandte Seite, d. h. in sogenannter Befüllrichtung, zu verstehen. Unter "eingangsseitig" ist eine der Förderrichtung pneumatisch gegenüberstehende Seite zu verstehen. Eine Eingangsseite wird in Befüllrichtung vor einer Ausgangsseite durchströmt.

Fig. 1 zeigt schematisch ein Druckluftsystem 100 mit an einem ein Druckluftversorgungssystem 110 angeschlossenen ersten Druckluftverbraucherkreis 170, vorliegend in Form eines Luftfedersystems 171 mit wenigstens einem Luftfederventil 70 und wenigstens einem Balg 71 sowie einem ersten Luftbehälter 73. Grundsätzlich kann ein Druckluftverbraucherkreis 170 auch anders oder mit mehr Teilen gebildet sein als dies vorliegend beispielhaft im Rahmen eines Luftfedersystems 171 gezeigt ist. An das Druckluftversorgungssystem 110 ist weiter unter anderem eine Druckluftaufbereitungsanlage -vorliegend in Form eines Lufttrocknerteils 2- angeschlossen. Die Druckluftaufbereitungsanlage hat einen nicht gezeigten Kompressor, der an einen Eingangsanschluss 1 des Lufttrocknerteils 2 angeschlossen ist. Vom Eingangsanschluss 1 führt eine Druckluftversorgungsleitung 3 über einen mit Filter versehenen Lufttrockner 4 zu einem Rückschlagventil 10 des Lufttrocknerteils 2 und weiter zu einer Verzweigung 13 des Druckluftversorgungssystems 110. Das hier in Entlüftungsrichtung, d. h. von der Verzweigung 13 in Richtung des Lufttrockners 4, als Trennventil wirkende Rückschlagventil 10 öffnet in Befüllrichtung der Druckluftversorgungsleitung 3 -d. h. in Gegenrichtung zur Entlüftungsrichtung, d. h. vom Lufttrockner 4 in Richtung zur Verzweigung 13- unter Druckbeaufschlagung selbsttätig. Das Rückschlagventil 10 ist insofern im folgenden auch als Versorgungsanschluss-Rückschlagventil 10 zu bezeichnen.

An die Druckluftversorgungsleitung 3 sind einerseits ein Überdruckventil 5 sowie andererseits ein drucksteuerbares Entlüftungsventil 6 angeschlossen, das in einer steuerdruckbeaufschlagten Stellung von einem Eingangsanschluss 1 zu einem Entlüftungsausgang 48 öffnet. Mit dem Ventilausgang des Entlüftungsventils 6 ist mittelbar auch der Ausgang eines als erstes Rückschlagventil 8 bezeichnetes -in Entlüftungsrichtung selbsttätig öffnendes- Rückschlagventil verbunden.

Der Eingang des ersten Rückschlagventils 8 wiederum ist einerseits an ein Steuerventil 7 und andererseits an ein sogenanntes Regenerationsventil 9 angeschlossen. Das als Magnetventil ausgelegte, von einer Steuereinheit 46 (ECU) elektrisch ansteuerbare Steuerventil 7 dient zur Steuerung eines nicht näher dargestellten Kompressors über einen pneumatischen Steueranschluss 47, wobei der Kompressor wiederum den Eingangsanschluss 1 mit Druckluft versorgt.

Noch ein als zweites Rückschlagventil 11 bezeichnetes Rückschlagventil öffnet ebenfalls in Entlüftungsrichtung selbsttätig und ist an die Druckluftversorgungsleitung 3 zwischen dem Lufttrockner 4 und dem Versorgungsanschluss-Rückschlagventil 10 in einer nicht näher bezeichneten Druckluftleitung angeschlossen. Nach Öffnung des Regenerationsventils 9 in die vorgenannte Druckluftleitung kann über eine sogenannte Regenerations-Drossel 12 und das dann selbsttätig öffnende zweite Rückschlagventil 11 die Druckluftversorgungsleitung 3 unter Regeneration des Lufttrockners 4 in Entlüftungsrichtung mit Druckluft beaufschlagt werden.

Wenn ein nicht gezeigter Kompressor in den Eingangsanschluss fördert, baut sich dagegen Druck in der Druckluftversorgungsleitung 3 auf und öffnet das Versorgungsanschluss-Rückschlagventil 10 während das zweite Rückschlagventil 11 sperrt.

Das Versorgungsanschluss-Rückschlagventil 10 ist in Befüllrichtung ausgangsseitig des Lufttrocknerteils 2 an die Verzweigung 13 angeschlossen, die wiederum über eine erste Druckluftleitung 14 mit einem Anschluss 15 verbunden ist, an den das vorgenannte wenigstens eine Luftfederventil 70, insbesondere ein oder mehrere elektronisch steuerbare Luftfederventile 70 -hier ECAS-Ventile- des Luftfedersystems 171 angeschlossen sind. Ein Luftfederventil 70 steuert das Befüllen und Entleeren eines schematisch gezeigten Balgs 71 des Luftfedersystems 171.

Ein Luftfederventil 70 kann auch mehrere Bälge steuern. In einer Abwandlung kann als erster Druckluftverbraucherkreis 170 auch eine druckluftbetriebene Liftanlage oder ein sonstiger Verbraucherkreis zusätzlich oder alternativ an die erste Druckluftleitung 14 angeschlossen sein.

Die Verzweigung 13 ist weiterhin mit einem ersten Überströmventil 16 einer ersten Prioritätsventilanordnung 160 verbunden.

Das erste Überströmventil 16 ist vorliegend mit optionaler Rückströmung als Teil der ersten Prioritätsventilanordnung 160 ausgebildet. Dazu ist dem ersten Überströmventil 16 in einer dieses unmittelbar umgehenden ersten Bypassleitung 162 ein erstes Bypass-Rückschlagventil 17 pneumatisch parallel geschaltet, das im Gegenstrom zum ersten Überströmventil 16 durchströmbar ist; also eine Durchlassrichtung aufweist, die entgegengesetzt zur Durchlassrichtung des ersten Überströmventils 16 ist. Die erste Prioritätsventilanordnung 160 ist in einer zwischen der ersten Druckluftleitung 14 und einer Verteilerleitung 18 angeschlossenen ersten Verbindungsleitung 161 angeschlossen. Insgesamt ist die erste Prioritätsventilanordnung 160 mit Vorteil vergleichsweise einfach ausgeführt. Insbesondere ist grundsätzlich keine aufwändige elektrische Steuerung desselben erforderlich, um verfügbare Druckluft auf die an die Verteilerleitung 18 angeschlossenen weiteren Verbraucherkreise einerseits und den ersten Druckluftverbraucherkreis 170 in Form des Luftfedersystems 171 andererseits aufzuteilen.

Vorliegend ist -zusätzlich zum Lufttrocknerteil- die erste Prioritätsventilanordnung 160 sowie die Verteilerleitung 18 Teil des Druckluftversorgungssystems 110. Das Druckluftversorgungssystem 110 wiederum ist Teil des in Fig. 1 gezeigten Druckluftsystems 100 und weist das Luftfedersystem 171 und das Lufttrocknerteil 2 auf. Das Druckluftsystem 100 hat weiter ein Versorgungssystem, das unter anderem mit von der Verteilerleitung 18 abzweigenden Versorgungsleitungen 23, 27, die zu Schutzventilen 24, 28 führen, gebildet ist. Auf diese Weise sind mit der Verteilerleitung 18 symbolisch weiter durch ihre jeweiligen Verbraucheranschlüsse 25, 30, 42, 43, 44, 45 gekennzeichnete Verbraucherkreise wie eine Betriebsbremse oder Feststellbremse, eine Fahrerhausfederung, eine Türsteuerung oder dergleichen verbunden. Es kann z. B. am Verbraucheranschluss 25 ein Verbraucherkreis vorgesehen sein. Es kann auch am Verbraucheranschluss 30 ein Verbraucherkreis vorgesehen sein. Mit 23 und 27 bezeichnete Versorgungsleitungen der Verbraucherkreise können beispielsweise neben den Verbraucheranschlüssen 25, 30 ein Schutzventil 24, 28 sowie einen Drucksensor 26, 29 aufweisen. An die Verbraucheranschlüsse 25 und 30 ist vorliegend jeweils ein Betriebsbremskreis angeschlossen. Ein Betriebsbremskreis beinhaltet jeweils einen oder mehrere nicht dargestellte Bremsdruckluftbehälter.

Vorliegend ist die Versorgungsleitung 23 und 27 jeweils mittels eines weiteren ersten und weiteren zweiten Rückschlagventils 31, 33 -hier des Versorgungssystems- auch mit den übrigen Verbraucheranschlüssen 42, 43, 44, 45 verbunden. An den miteinander verbundenen Ausgängen 32 des ersten und zweiten Rückschlagventils 31, 33 ist ein Druckbegrenzungsventil 34 zur Versorgung der übrigen Verbraucherkreise über weitere Schutzventile 35, 36, 37 und ein drittes und fünftes Rückschlagventil 38 und 41 -hier des Versorgungssystems- in Durchlassrichtung angeschlossen. Die Versorgungsleitung 27 ist mit dem das Schutzventil 35 enthaltenden Verbraucherkreis über ein viertes Rückschlagventil 39 -hier des Versorgungssystems- und eine Drossel 40 gekoppelt. Beispielsweise kann ein Anhänger an dem Verbraucheranschluss 42, ein Feststellbremskreis am Verbraucheranschluss 43 und jeweils ein Nebenverbraucherkreis am Verbraucheranschluss 44 und 45 angeschlossen sein. Dazu sind diese mit den zu versorgenden Betriebskomponenten der Verbraucherkreise verbunden.

Eine elektronische Steuereinheit 46 (ECU) erzeugt elektrische Steuersignale zur Steuerung von elektrisch steuerbaren, die Druckluftströmung, -trocknung und - verteilung steuernden Ventile auf der Grundlage von erfassten Drucksensorwerten und weiteren Betriebsparametern wie Zündstellung, Kupplungsbetätigung und Aktivierung des Bremssystems oder dergleichen.

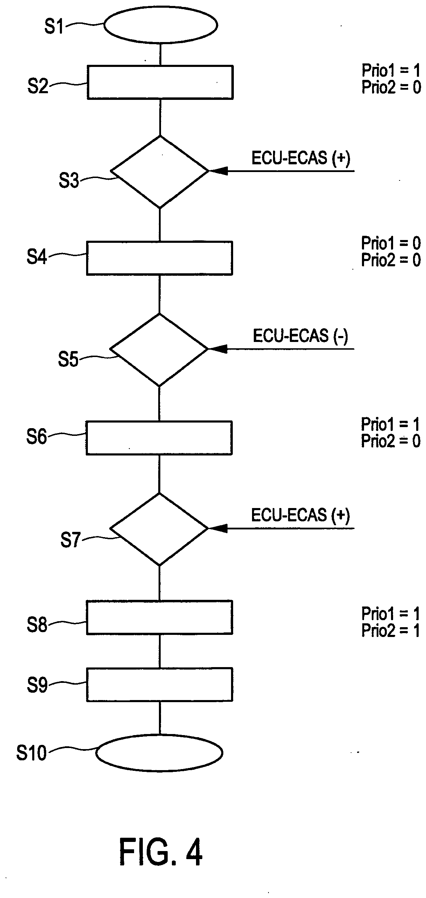

Die Steuereinheit 46 -hier eine ECU, alternativ auch eine andere Elektronikschaltung - sendet -in der noch folgenden Fig.4 mit "+" bezeichnete- Freigabesignale an die nicht dargestellte Elektronik des Luftfedersystems 171 -hier eine ECAS.

Die Elektronik des Luftfedersystems 171 wiederum steuert die Luftfederventile 70 und ist damit in der Lage die Luftentnahme des Luftfedersystems 171 aus der zur Verfügung stehenden von dem Lufttrocknerteil 2 gelieferten Druckluft zu steuern. Insbesondere ist die Steuereinheit 46 als ECU ausgebildet, beispielsweise über einen Fahrzeugbus -hier ein CAN-Bus- ein Freigabesignal "+" an eine ECAS des Luftfedersystems 171 zu senden. Aufgrund des Freigabesignals "+" kann dem Luftfedersystem 171 erlaubt werden, Druckluft zu verbrauchen. Dies ist regelmäßig der Fall, wenn beispielsweise ein an einen Verbraucheranschluss 25, 30 angeschlossener Bremskreis keine Druckluft benötigt, d. h. entweder das Fahrzeug steht oder ein Bremskreis ausreichend mit Druckluft bespeist ist. Das Freigabesignal kann zum Beispiel abhängig sein von einem in einer Betriebsbremse vorhandenen Druck, der hier mit Drucksensoren 26, 29 messbar ist.

Die erste Prioritätsventilanordnung 160, konkret das erste Überströmventil 16, weist vorliegend einen im Vergleich zu den Öffnungsdrücken der Schutzventile 24, 28 und im Vergleich zum Balgdruck höheren Öffnungsdruck auf. Damit ist der am Eingangsanschluss 1 des Lufttrocknerteils 2 angeschlossene Kompressor in der Lage, den oder die mit dem Anschluss 15 verbundene Bälge 71 der Luftfedern des Luftfedersystems 171, vergleichsweise rasch, mit Druckluft zu befüllen; somit können diese vergleichsweise rasch auf einen vergleichsweise hohen Druck gebracht werden. Dieses ist zum Beispiel beim Auffüllen eines druckluftleeren Luftfedersystems 171 eines Fahrzeugs von Vorteil. Dieser Vorteil erweist sich als besonders relevant für ein Fahrzeug in Form eines Nutzfahrzeugs.

Vorliegend füllt ein Kompressor über das Lufttrocknerteil 2 zunächst die Verzweigung 13 mit Druckluft. Wenn das oder die Luftfederventile 70 geöffnet sind, werden auch der oder die Bälge des Luftfedersystems 171 befüllt.

In diesem Fall sperrt die erste Prioritätsventilanordnung 160 - konkret das erste Überströmventil 16- die erste Verbindungsleitung 161, d. h. der Weg von der Druckluftversorgungsleitung 3 zur Verteilerleitung 18 ist gesperrt. Wenn ein gewünschter Druck, beispielsweise Balgdruck eines Balgs 71, im Luftfedersystem 171 erreicht ist, kann das Luftfederventil 70 geschlossen werden. Dadurch werden der oder die Bälge 71 vergleichsweise schnell aufgefüllt, da der Kompressor nur die Bälge 71 auffüllt, während die übrigen an den Verbraucheranschlüssen 25, 30, 42, 43, 44, 45 angeschlossenen Verbraucherkreise durch die erste Prioritätsventilanordnung 160 gesperrt sind. Ein weiterer Effekt ist der, dass die Fahrzeugfederung, d. h. durch das Luftfedersystem 171 -sofern die Bremskraft des Fahrzeugs sichergestellt ist- als bevorzugtes System des Fahrzeugs betriebsbereit ist. Nachdem nämlich die Luftfederventile 70 geschlossen sind, steigt der Druck in der Verzweigung 13 weiter bis die erste Prioritätsventilanordnung 160 -konkret das erste Überströmventil 16- öffnet und die Verteilerleitung 18 sowie die an den Verbraucheranschlüssen 25, 30, 42, 43, 44, 45 angeschlossenen Verbraucherkreise mit Druckluft bespeist werden.

Für den Fall, dass eine Bremsanlage des Fahrzeugs noch nicht betriebsbereit sein sollte, geht die Fahrzeugsicherheit vor; das Druckluftsystem 100 der Fig. 1 wird von der Steuereinheit 46 dann zunächst so gesteuert, dass zunächst das Bremssystem betriebsbereit gestellt wird. Dazu kann -über ein zuvor erwähntes Freigabesignal "+" gesteuert- vorgesehen sein, dass die Luftfederventile 70 beim Auffüllen der leeren Luftdruckanlage des Fahrzeugs zunächst geschlossen bleiben. In dem Fall steigt der Druck in der Verzweigung 13 sofort an und öffnet die erste Prioritätsventilanordnung 160 -konkret das erste Überströmventil 16- beim Erreichen von dessen Öffnungsdruck. Die Verteilerleitung 18 wird danach mit Druckluft befüllt, so dass sich dann die Schutzventile 24, 28 öffnen, die als Überströmventile ausgelegt sind. In dem vorliegend beschriebenen Fall wird dann ein Behälter, zum Beispiel des Betriebsbremskreises an einem Verbraucheranschluss 25, 30, als erstes befüllt. Das Befüllen wird fortgesetzt solange bis ein Druck in einem oder beiden der Betriebsbremskreise an den Verbraucheranschlüssen 25, 30 hoch genug ist, um eine ausreichende Betriebsbremswirkung sicherzustellen. Der Druck wird dazu durch Messung mit den Drucksensoren 26, 29 überprüft. Zeigen diese einen ausreichend hohen Druck an, werden entsprechende Signale an die Steuereinheit 46 (ECU) übermittelt, welche wiederum das Freigabesignal an eine Steuereinheit (ECAS, ECU) des Luftfedersystems 171 in der oben erläuterten Weise übermitteln kann. Auf diese Weise wird zusätzlich elektronisch geregelt sichergestellt, dass erst nach ausreichender Inbetriebnahme der Betriebsbremskreise das Luftfedersystem 171 ein Öffnen der Luftfederventile 70 veranlasst, um die Bälge 71 zu befüllen. Beim Befüllen der Bälge bricht schließlich der Druck in der Verzweigung 13 zusammen, so dass im Ergebnis die erste Prioritätsventilanordnung 160 -konkret das erste Überströmventil 16- schließt.

In dem Fall fördert dann ein Kompressor nur in die Bälge 71 und füllt diese vergleichsweise schnell mit Druckluft, gegebenenfalls bis Betriebsdruck auf. Auf diese Weise wird eine Vorrangigkeit der Betriebsbremsbereitschaft vor der Bereitschaft der Fahrzeugfederung erzielt. Nachdem die Bälge 71 aufgefüllt worden sind und die Luftfederventile 70 geschlossen haben, steigt der Druck in der Verzweigung 13 weiter bis die erste Prioritätsventilanordnung 160 -konkret das erste Überströmventil 16- wieder öffnet und die weiteren Verbraucherkreise an den Verbraucheranschlüssen 25, 30, 42, 43, 44, 45 weiter aufgefüllt werden können. Sobald alle Bälge und Verbraucherkreise aufgefüllt sind, kann der Kompressor abgeschaltet werden oder jedenfalls eine Druckluftversorgung über das Lufttrocknerteil 2, bzw. das Druckluftversorgungssystem 110 zunächst pausieren.

Diese Erläuterungen gelten insbesondere für den Fall einer geschlossenen zweiten Prioritätsventilanordnung 120. Die zweite Prioritätsventilanordnung 120 ist in einer zwischen der ersten Druckluftleitung 14 und dem ersten Luftbehälter 73 angeschlossenen zweiten Verbindungsleitung 121 angeschlossen. Vorliegend ist dazu der Öffnungsdruck der zweiten Prioritätsventilanordnung 120 höher als ein Maximaldruck des Luftfedersystems 171, d. h. insbesondere höher als ein Maximaldruck eines Balgs 71. Erst wenn, bei einem befüllten Luftfedersystem 171, ein Öffnungsdruck der zweiten Prioritätsventilanordnung 120 erreicht wird, wird auch der über eine weitere Druckleitung 72 an die zweite Verbindungsleitung 121 angeschlossene erste Luftbehälter 73 mit Druckluft befüllt. Die zweite Prioritätsventilanordnung 120 ist vorliegend mit einem zweiten Überströmventil 20 und mit einem in einer zweiten Bypassleitung 122 dazu parallel geschaltetem zweiten Bypass-Rückschlagventil 21 -d. h. weitgehend baugleich und in der Funktionsweise analog zur ersten Prioritätsventilanordnung 160- ausgebildet. Grundsätzlich können in einer Abwandlung die erste und zweite Prioritätsventilanordnung 160, 120 jedoch auch unterschiedlich -je nach Zweckmäßigkeit und Bedarf- ausgebildet sind.

Nach einer sodann insgesamt grundsätzlich aufgefüllten Druckluftanlage eines Fahrzeugs erlaubt die vorgenannte optionale Rückströmung bei der ersten und zweiten Prioritätsventilanordnung 160, 120 -jeweils gebildet mittels dem ersten bzw. zweiten Bypass-Rückschlagventil 17, 21- je nach Bedarf ein weiteres Bespeisen des oder der am Anschluss 15 angeschlossenen Bälge 71. Diesmal kann eine Bespeisung aufgrund einer Rückströmung -insbesondere aus dem oder den an der zweiten Prioritätsventilanordnung 120 oder aus den an den Schutzventilen 24, 28 und den Verbraucheranschlüssen 25, 30 nicht näher dargestellten, angeschlossenen Behältern- erfolgen. Dieser auch als Druckausgleich zu bezeichnende Vorgang infolge der möglichen Rückströmung wird erst durch Schließen sowohl des ersten als auch zweiten Bypass-Rückschlagventils 17, 21 abgeschlossen. Ist der ausgleichbare Druck beim Druckausgleich vergleichsweise gering, kann es sein, dass vorher die Schutzventile 24, 28 schließen, um einen Restdruck in einer Bremsanlage zu halten. Dadurch ist eine gewisse Bremswirkung bei einer Druckluftanlage des Fahrzeugs sichergestellt ist. Die in Fig. 1 gezeigte Rückströmung in der ersten und zweiten Prioritätsventilanordnung 160, 120 ermöglicht ein erstes rasches Befüllen des oder der am Anschluss 15 angeschlossenen Bälge 71 aus Behältern und zwar solange bis eine Prioritätsventilanordnung 160, 120 schließt. Nach Schließen sowohl des ersten Bypass-Rückschlagventils 17 als auch des zweiten Bypass-Rückschlagventils 21 ist wiederum ein Befüllen der Bälge 71 aus einem Kompressor des Druckluftversorgungssystems 110, d. h. konkret über das Lufttrocknerteil 2 und die erste Druckluftleitung 14 möglich. Wie zuvor erläutert kann wiederum ein Befüllen der Bälge 71 erfolgen, ohne dass der erste Druckluftbehälter 73 oder die an den Verbraucheranschlüssen 25, 30 angeschlossenen Behältern gleichzeitig mit aufgefüllt werden, da sowohl die erste Prioritätsventilanordnung 160 als auch die zweite Prioritätsventilanordnung 120 - vorbehaltlich eines Freigabesignals "+"- geschlossen sind.

Aufgrund dieser Maßgabe ist bei der vorliegend beschriebenen Ausführungsform der Fig. 1 insgesamt ein vergleichsweise rasches Befüllen der Bälge 71, jedenfalls aber Bespeisen des Luftfedersystems 171, gewährleistet. Nach vollständigem Befüllen der Bälge 71 auf Maximaldruck werden die Luftfederventile 70 wiederum geschlossen, so dass der Druck in der Verzweigung 13 solange steigt, bis schließlich die erste Prioritätsventilanordnung 160 öffnet und die anderen Verbraucherkreise an den Verbraucheranschlüssen 25, 30, 42, 43, 44, 45 bespeist werden. Bei der hier beschriebenen Ausführungsform ist vorzugsweise vorgesehen, dass ein Öffnungsdruck der ersten Prioritätsventilanordnung 160 unter einem Öffnungsdruck der zweiten Prioritätsventilanordnung 120 liegt. Grundsätzlich können jedoch auch die Öffnungsdrücke gleich hoch sein oder ein Öffnungsdruck der zweiten Prioritätsventilanordnung 120 unter einem Öffnungsdruck der ersten Prioritätsventilanordnung 160 liegen.

Schließlich -wenn wiederum alle Bälge 71 und Verbraucherkreise befüllt sindkann der Kompressor abgeschaltet werden bzw. eine Druckluftzufuhr aus dem Druckluftversorgungssystem 110, konkret dem Lufttrocknerteil 2, pausieren.

Es ist ersichtlich, dass zum Sperren der weiteren Verbraucherkreise an den Verbraucheranschlüssen 25, 30, 42, 43, 44, 45 und auch zum Sperren des oder der ersten Luftbehälter 73 der Öffnungsdruck der ersten Prioritätsventilanordnung 160 höher sein sollte als der maximale Arbeitsdruck in der ersten Druckleitung 14, jedenfalls aber höher als der maximale Druck des Balgs 71.

Grundsätzlich werden für den Fall, dass der Öffnungsdruck der zweiten Prioritätsventilanordnung 120 über dem Öffnungsdruck der ersten Prioritätsventilanordnung 160 liegt zunächst die Bremsbehälter an den Verbraucherkreisen der Verbraucheranschlüsse 25, 30 befüllt bevor ein dem Luftfedersystem 171 zugeordneter erster Luftbehälter 73 befüllt wird. Sofern eine solche Priorisierung nicht beabsichtigt ist, kann ein Öffnungsdruck der zweiten Prioritätsventilanordnung 120 auch geringer oder gleich dem Öffnungsdruck der ersten Prioritätsventilanordnung 160 ausgelegt sein.

Darüber hinaus weist sowohl die erste Prioritätsventilanordnung 160 als auch die zweite Prioritätsventilanordnung 120 praktisch keine bzw. nur eine geringfügige oder sogar negative Hysterese auf. Die Hysterese betrifft den Schaltvorgang, speziell den Schaltdruck. Konkret wird die Hysterese gekennzeichnet durch den Unterschied zwischen Öffnungsdruck und Schließdruck einer ersten bzw. zweiten Prioritätsventilanordnung 160, 120. Ein Schließdruck kann beispielsweise um 15 % geringer sein als ein Öffnungsdruck. Dies führt dazu, dass bei vorhandenem ausgangsseitigem Druck in einem ersten bzw. zweiten Überströmventil 16, 20, selbiges schon vor dem eigentlichen für den Schaltzeitpunkt vorgesehenen Öffnungsdruck öffnet. Dem in der Verteilerleitung 18, Druckleitung 72 oder der ersten bzw. zweiten Verbindungsleitung 161, 121 vorhandenen Druck ist nämlich eine Wirkfläche im ersten bzw. zweiten Überströmventil 16 bzw. 20 zugeordnet. Nur bei druckloser Verteilerleitung 18 bzw. Druckleitung 72 öffnet ein erstes bzw. zweites Überströmventil 16 , 20 beim theoretisch vorgesehenen Öffnungsdruck. Um diese Abhängigkeit des Schaltdrucks vom Druck auf einer Ausgangsseite des ersten bzw. zweiten Überströmventils 16, 20 so gering wie möglich zu halten, ist deshalb vorgesehen, die Hysterese vergleichsweise klein bzw. null oder leicht negativ einzustellen. Negative Hysterese ist gekennzeichnet durch einen Schließdruck, insbesondere bei einem ersten bzw. zweiten Überströmventil 16, 20, der größer ist als ein Öffnungsdruck. Eine kleine Hysterese kann man z.B. dadurch erzielen, dass dem vorhandenen Druck nur eine kleine Wirkfläche im ersten bzw. zweiten Überströmventil 16 , 20 zugeordnet ist. Ist die Wirkfläche null ist auch die Hysterese null. Bei negativer Hysterese wirkt der Druck in der Verteilerleitung 18 bzw. Druckleitung 72 in umgekehrter Richtung als der in der ersten bzw. zweiten Verbindungsleitung 161, 121 vorhandene Druck. Durch die kleine, null bzw. negative Hysterese wird verhindert, dass ein erstes bzw. zweites Überströmventil 16, 20, abhängig von dem in der Verteilerleitung 18 bzw. Druckleitung 72 vorhandenen Druck frühzeitig öffnet und letztlich das Konzept der Erfindung beeinträchtigt. Auf diese Weise ist besonders zuverlässig sichergestellt, dass ein an die zweite Prioritätsventilanordnung 120 angeschlossener erster Luftbehälter 73 bzw. an die Verteilerleitung 18 angeschlossene Behälter von Verbraucherkreisen nicht sofort mitbefüllt werden müssen. Insbesondere weist die zweite Prioritätsventilanordnung 120 eine kleine, keine oder negative Hysterese für das Überströmventil 20 auf, so dass ein frühzeitiges Öffnen des Überströmventils 20 verhindert bzw. ein Befüllen des Luftbehälters 73 zusammen mit den Bälgen 71 grundsätzlich unterbunden ist.

Insbesondere ist bei den vorliegend beschriebenen Ausführungsformen in der ersten Druckluftleitung 14 ein Trenn-Rückschlagventil 80 vorgesehen, das dazu dient, nach einer Erstbefüllung oder Wiederbefüllung des ersten Luftbehälters 73 einen dann erreichten Druck oder Maximaldruck besonders zuverlässig zu halten. Damit steht dem Luftfedersystem 171 die maximale Druckluftmenge zur Verfügung.

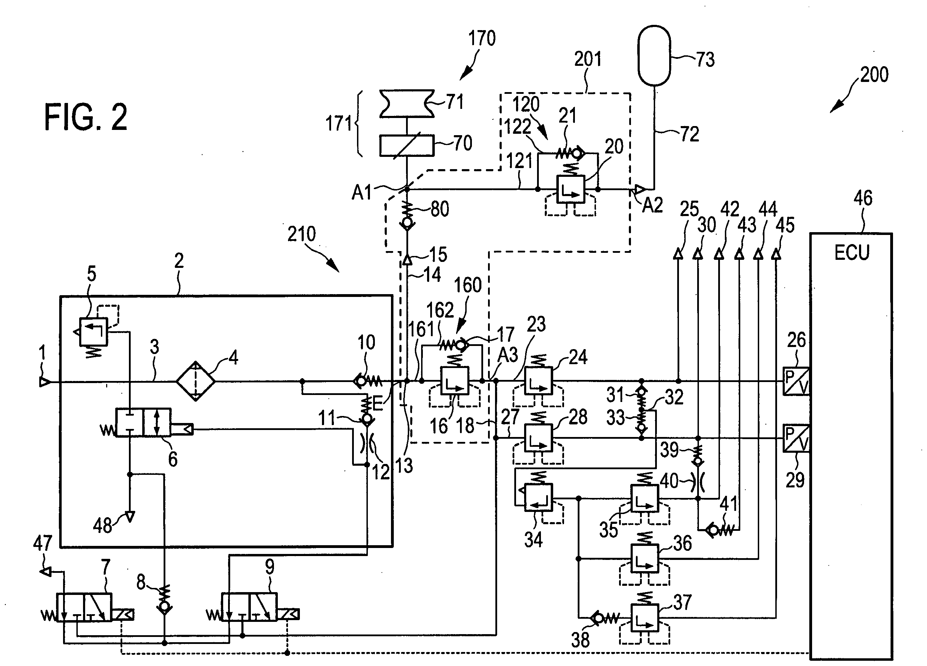

Zwar ist die generell eine Funktionsweise eines Druckluftsystems 100, 200 - entsprechend der zuvor erläuterten Weise- auch bei fehlendem Trenn-Rückschlagventil 80 grundsätzlich sichergestellt. Jedoch könnte in dem Fall zum Beispiel beim Bremsen des Fahrzeuges der Druck in der ersten Verbindungsleitung 161 sinken, wodurch -ohne Trenn-Rückschlagventil 80- auch Druckluft aus dem Luftbehälter 73 entweichen würde und so ein erreichter Druck bzw. Maximaldruck unter einen optimalen Wert sinken würde. Bei den vorliegend beschriebenen Ausführungsformen erweist sich ein einziges Trenn-Rückschlagventil 80 als vergleichsweise einfach in der Realisierung. Ein einziges Trenn-Rückschlagventil 80 ist ausreichend, um die Drucksicherung jedenfalls für das Luftfedersystem 171, insbesondere für den ersten Luftbehälter 73, sicherzustellen. Die zuvor gemachten Ausführungen gelten gleichermaßen für die in Fig. 1 gezeigte Ausführungsform eines ersten Druckluftsystems 100 als auch für die in Fig. 2 gezeigte zweite Ausführungsform eines zweiten Druckluftsystems 200. Im Folgenden wird insbesondere auf die Unterschiede Bezug genommen.

Bei der in Fig. 1 gezeigten Ausführungsform eines ersten Druckluftsystems 100 ist darüber hinaus in besonders bevorzugter Weise ein an das Druckluftversorgungssystem 110 lösbar anschließbares Prioritätsgerät 101 gebildet. Unter einem Prioritätsgerät 101 ist vorliegend eine Baueinheit mit der zweiten Prioritätsventilanordnung 120, dem Trenn-Rückschlagventil 80 und mit der zweiten Verbindungsleitung 121 sowie, wenigsten in Teilen, mit der ersten Druckluftleitung 14 zu verstehen, die vorzugsweise in einem Gehäuse integriert ist - letzteres ist in Fig. 1 gestrichelt symbolisiert. Das separate lösbar an das Druckluftversorgungssystem anschließbare Prioritätsgerät 101 hat hier drei Anschlüsse, nämlich den zuvor erläuterten Anschluss 15 als Zuführungsanschluss E, der eingangsseitig an die erste Druckluftleitung 14 angeschlossen ist. Insbesondere ist an den Zuführungsanschluss E das Lufttrocknerteil 2 und/oder die erste Prioritätsventilanordnung 160 anschließbar. Darüber hinaus weist das Prioritätsgerät 101 einen ersten Abführungsanschluss A1 auf, der ausgangsseitig an die erste Druckluftleitung 14 angeschlossen ist. Insbesondere ist an den ersten Abführungsanschluss A1 das Luftfedersystem 171 anschließbar. Das lösbar anschließbare Prioritätsgerät 101 weist in der zweiten Verbindungsleitung 121 einen zweiten Abführungsanschluss A2 auf, an den ausgangsseitig der erste Luftbehälter 73 bzw. die weitere Druckleitung 72 anschließbar ist.

In dieser Ausführungsform -gegebenenfalls in einer Abwandlung auch ohne separates Gehäuse- ist das separate und lösbar anschließbare Prioritätsgerät 101 vorteilhaft dazu geeignet, ein Druckluftversorgungssystem 110 zu vereinheitlichen und gleichwohl flexibel auszulegen. Das Prioritätsgerät 101 ermöglicht nämlich am zweiten Abführungsanschluss A2 grundsätzlich den Anschluss eines oder mehrerer Luftbehälter 73, z.B. eines einzigen Luftbehälters 73 wie dies in Fig.1 dargestellt ist. Bei Fahrzeugen ohne Luftbehälter 73 kann dagegen auch das mit dem Zuführungsanschluss E an die erste Druckluftleitung 14 lösbar anschließbare Prioritätsgerät 101 entfallen. Mit anderen Worten kann ein Druckluftversorgungssystem 110 dann die erste Druckluftleitung 14 ohne angeschlossenes Prioritätsgerät 101, d. h. die erste Druckluftleitung 14 mit dem angeschlossenen ersten Druckluftverbraucherkreis 170, z.B. vorliegend in Form des oben erläuterten Luftfedersystems 171, aufweisen. Dies reduziert Kosten im Vergleich zu bisherigen Systemen beträchtlich.

Andererseits kann ein übriger Teil des Druckluftversorgungssystems 110 unabhängig von einer Zahl von ersten Luftbehältern 73 gleich ausgelegt werden. D. h. es sind im Prinzip keine Varianten eines Druckluftversorgungssystems 110 für einerseits mit und andererseits ohne ersten Luftbehälter73 vorzusehen. Auch dies reduziert Kosten aufgrund der höheren Stückzahl baugleicher Druckluftversorgungssysteme 110. Bei der vorliegend beschriebenen Ausführungsform eignet sich das beschriebene Druckluftversorgungssystem 110 grundsätzlich für eine Vielzahl von Auslegungen von Luftbehältersystemen, die je nach Bedarf über ein lösbar anschließbares Prioritätsgerät 101 an das beschriebene Druckluftversorgungssystem 110 angeschlossen werden können.

Insbesondere kann z.B. auf eine Anbindung des in Fig. 1 beschriebenen ersten Luftbehälters 73 an eine Verteilerleitung 18 verzichtet werden. Damit ist die Auslegung eines Luftbehältersystems abgekoppelt bzw. unabhängig von der Auslegung der weiteren Verbraucherkreise, die an der Verteilerleitung 18 angeschlossen sind. Dies vereinfacht weiter die Auslegung des Druckluftversorgungssystems 110. Gleiches gilt im Wesentlichen auch für das anhand von Fig. 2 beschriebene zweite Druckluftversorgungssystem 210.

Insbesondere ist für einen Luftbehälter 73 kein gesonderter Anschluss an eine ECAS oder gesonderter Anschluss an eine ECU erforderlich. Die bedarfsmäßige Sperrung oder Freischaltung eines Luftbehälters 73 erfolgt gemäß der Auslegung des Druckluftversorgungssystems 110, 210 der Fig. 1 oder Fig. 2 mittels der zweiten Prioritätsventilanordnung 120.

Betreffend die in Fig. 2 gezeigte weitere Ausführungsform eines Druckluftsystems 200 wird hinsichtlich des Lufttrocknerteils 2 und des weiteren Versorgungssystems sowie der übrigen Gemeinsamkeiten grundsätzlich auf die Beschreibung des Druckluftsystems 100 der Fig. 1 verwiesen; im Folgenden werden insbesondere die Unterschiede erläutert. Im Unterschied zum Druckluftsystem 100 der Fig. 1 ist beim Druckluftsystem 200 der Fig.2 ein zweites Prioritätsgerät 201 in einer Variante ausgeführt. Wie das erste Prioritätsgerät 101 weist das zweite Prioritätsgerät 201 die zweite Prioritätsventilanordnung 120 und das Trenn-Rückschlagventil 80 mit der zweiten Verbindungsleitung 121 und den ausgangsseitigen Abführungsanschlüssen A1 und A2 auf. Vorliegend umfasst das zweite Prioritätsgerät 201 darüber hinaus in integrierter Weise auch die erste Prioritätsventilanordnung 160 mit der ersten Verbindungsleitung 161. Das zweite Prioritätsgerät weist einen dritten ausgangsseitigen Abführungsanschluss A3 an die Verteilerleitung 18 auf, der zwischen der zweiten Verbindungsleitung 161 und der Verteilerleitung 18 gebildet ist. Außerdem weist das zweite Prioritätsgerät 201 im Unterschied zum ersten Prioritätsgerät 101 einen eingangsseitigen Zuführanschluss E auf, an den direkt der Anschluss zum Lufttrocknerteil 2 bzw. die Verzweigung 13 angeschlossen werden kann. Das zweite Prioritätsgerät 201 weist somit vier Anschlüsse E und A1, A2, A3 auf und ist ähnlich wie das erste Prioritätsgerät 101 wiederum separat und lösbar an das Druckluftversorgungssystem 210 anschließbar. In besonders bevorzugter Weise kann das zweite Prioritätsgerät 201 direkt an das Lufttrocknerteil 2 über den Zuführungsanschluss E angeschlossen werden. Insofern entspricht das in Fig.2 gezeigte Druckluftversorgungssystem 210 im Wesentlichen dem Luftrocknerteil 2. An den ersten Abführungsanschluss A1 kann das Luftfedersystem 171 angeschlossen werden. An den zweiten Abführungsanschluss A2 kann der erste Luftbehälter 73 bzw. die weitere Druckleitung 72 zum Luftbehälter 73 angeschlossen werden. Am dritten Abführungsanschluss A3 kann direkt die Verteilerleitung 18 oder eine Fortsetzung der ersten Verbindungsleitung 161 angeschlossen werden. Insgesamt kann das in Fig. 2 gezeigte Druckluftsystem 200 -ähnlich wie das in Fig. 1 gezeigte Druckluftsystem 100- modular und dennoch flexibel aufgebaut sein. Das erste Druckluftversorgungssystem 110 ist insofern überlegen, als dass das erste Prioritätsgerät 101 dort nur abhängig von der Funktionalität des Luftfedersystems 171 auszulegen ist. Das zweite Prioritätsgerät 201 hat dagegen eine höher integrierte Funktionalität, die auch weitere Verbraucherkreise berücksichtigen kann.

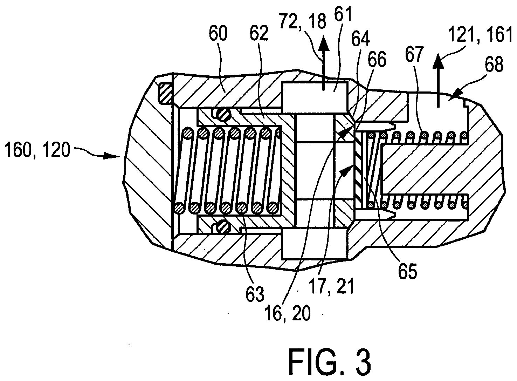

In Fig. 3 ist ein Ausführungsbeispiel eines ersten bzw. zweiten Prioritätsventils 160, 120 der Fig.1 oder Fig.2 mit einer Rückströmung gezeigt, die mittels eines ersten bzw. zweiten Rückschlagventils 17, 21 und geeignetem ersten bzw. zweiten Überströmventil 16, 20 gebildet sein kann. Dazu ist ein Ventilgehäuse 60 vorgesehen, das einen mit einer Druckleitung -zum Beispiel einer Verteilerleitung 18 oder einer Druckleitung 72- verbindbaren ersten Fluidanschluss 61 und einen Ventilkörper 62 umfasst, der durch eine erste Feder 63 auf ein Ventilsitz 64 vorgespannt wird; dies zur Bildung eines ersten bzw. zweiten Überströmventils 16, 20 der Fig.1 bzw. Fig.2. Ein so gestaltbares erstes bzw. zweites Prioritätsventil 160, 120 enthält weiterhin ein mittelbar mit der Druckluftleitung 14 und dem Trenn-Rückschlagventil 80, sowie weiter dann mit dem Versorgungsanschluss-Rückschlagventil 10, verbindbaren zweiten Fluidanschluss 68; an den zweiten Fluidanschluss 68 ist dazu unmittelbar die zweite Verbindungsleitung 121 bzw. die erste Verbindungsleitung 161 angeschlossen. Zur Bildung des ersten bzw. zweiten Bypass-Rückschlagventils 17, 21 ist im Ventilgehäuse 60 weiter ein Ventilelement 65 angeordnet, das durch eine zweite Feder 67 auf einen auf dem Ventilkörper 62 befindlichen Ventilsitz 66 vorgespannt wird. Unter Druckbeaufschlagung des Ventilelements 65 seitens des ersten Fluidanschlusses 61 kann das Ventilelement 65 also gegen die Federkraft der zweiten Feder vom Ventilsitz 66 abgehoben werden; also das erste bzw. zweite Bypass-Rückschlagventil 17, 21 selbsttätig öffnen. Konkret hebt das Ventilelement 65 vom Ventilsitz 66 ab, wenn der Fluiddruck am ersten Fluidanschluss 61 die durch die erste Feder 67 und vom Fluiddruck am zweiten Fluidanschluss 68 ausgeübte Kraft überwindet, so dass der erste und zweite Fluidanschluss 61, 68 fluidkommunizierbar miteinander gekoppelt sind und eine Rückströmung ermöglicht ist. Wenn dagegen der Fluiddruck am zweiten Fluidanschluss 68 und die Federkraft der zweiten Feder 67, die durch die erste Feder 63 ausgeübte Kraft überwinden, hebt der Ventilkörper 62 vom Ventilsitz 64 ab. Dadurch wird der erste und zweite Fluidanschluss 61, 68 fluidkommunizierend miteinander verbunden.

In Fig. 4 ist in zusammenfassender Weise eine bevorzugte Ausführungsform eines Ablaufs für ein Steuerverfahren gezeigt, das im Wesentlichen die Befüllung einer Druckluftanlage bei einem Fahrzeug, d. h. mit einem Druckluftsystem 100, 200 gemäß dem vorstehenden Konzept der Erfindung erlaubt.

Nach dem Start S1 des Fahrzeugs kann in einem Verfahrensschritt S2 zunächst ein teilweises Speisen der Bremskreise, zum Beispiel am Verbraucheranschluss 25, 30 erfolgen. Dazu ist die erste Prioritätsventilanordnung 160 offen (Prio1=1) und die zweite Prioritätsventilanordnung 120 geschlossen (Prio2=0). Dies ist insbesondere der Fall, wenn ein Freigabesignal "+" für die Luftfederventile 70 eines Luftfedersystems 171 durch die ECU an die ECAS des Luftfedersystems 171 zum Start S1 noch nicht erteilt wurde.

In einem Verfahrensschritt S3 kann -sofern ein ausreichender Druck nach teilweiser Bespeisung eines Bremskreises vorliegt- ein Freigabesignal "+" an das Luftfedersystem 171 erfolgen, indem die ECU das Freigabesignal "+"an die ECAS des Luftfedersystems 171 kommuniziert.

In einem weiteren Verfahrensschritt S4 kann dann bei weiterer Kompressortätigkeit eine Bespeisung des Luftfedersystems 171 erfolgen. Dabei ist die erste Prioritätsventilanordnung 160 geschlossen (Prio1=0). Auch die zweite Prioritätsventilanordnung 120 ist geschlossen (Prio2=0), da in beiden Fällen der Öffnungsdruck nicht erreicht ist.

In einem weiteren Verfahrensschritt S5 kann ein Freigabesignal "+" den Luftfederventilen 70 durch ein Sperrsignal "-" der ECU an die ECAS des Luftfedersystems 171 wieder entzogen werden, so dass die Luftfederventile 70 schließen. Im Allgemeinen wird das Freigabesignal "+" nicht entzogen. Wenn die Bälge gefüllt sind, werden die Luftfederventile 70 von der ECAS selbsttätig geschlossen. Verfahrensschritte S5 und S7 können insofern optional entfallen.

Der Öffnungsdruck der ersten Prioritätsventilanordnung 160 wird erreicht und die erste Prioritätsventilanordnung 160 öffnet. Der Öffnungsdruck der zweiten Prioritätsventilanordnung 120 ist dann noch nicht erreicht, da der Öffnungsdruck der zweiten Prioritätsventilanordnung 120, bevorzugt geringfügig, über dem Öffnungsdruck der ersten Prioritätsventilanordnung 160 liegt. Ein frühzeitiges Öffnen der zweiten Prioritätsventilanordnung 120 wird so zum einen verhindert und zum anderen garantiert dies -in einem weiteren Verfahrensschritt S6- zunächst das vollständige Speisen der weiteren Verbraucherkreise. Insbesondere betrifft dies die an die Verbraucherkreisanschlüsse 25, 30 angeschlossenen Bremskreise mit den dort vorhandenen Druckluftbehältern.

Ist der Öffnungsdruck der zweiten Prioritätsventilanordnung 120 schließlich erreicht, kann schließlich auch die zweite Prioritätsventilanordnung 120 öffnen (Prio1=1, Prio2=1). In dem Fall erfolgt in einem achten Verfahrensschritt S8 ein Befüllen des ersten Luftbehälters 73 durch eine Tätigkeit des Kompressors, der Druckluft über das Lufttrocknerteil 2 liefert.

In einem neunten Verfahrensschritt S9 kann bei einem erneutem Öffnen der Luftfederventile 70 ein Ausgleich von Druckluftströmen aus den Luftbehältern 73 und den an den weiteren Verbraucherkreisen angeschlossenen Behältern über die als erstes bzw. zweites Bypass-Rückschlagventil 17, 21 ausgebildete Rückströmfunktion der ersten bzw. zweiten Prioritätsventilanordnung 160, 120 in die Luftfederbälge 71 erfolgen.

Im Verfahrensschritt S10 kann selbiges pausieren oder beendet werden.

Insgesamt erweist sich ein Druckluftsystem 100, 200 -aufgrund der gebildeten Schaltungsanordnung mit einer zweiten Prioritätsventilanordnung 120- bei den zuvor erläuterten Ausführungsbeispielen aufgrund einer Kommunikation mit dem elektronisch gesteuerten Luftfedersystem 171 mit einer Steuerung ECAS als flexibel und zudem vergleichsweise kostengünstig. Beispielsweise ist es, wie zuvor erläutert anhand von Fig. 3, nicht zwingend erforderlich, dass das erste Überströmventil 16 bzw. das zweite Überströmventil 20 in Form eines Magnetventils realisiert werden müsste. Diese Maßnahmen können genutzt werden, um den technischen Aufwand zur Realisierung eines Druckluftsystems 100, 200 zu verringern und dennoch dessen Zuverlässigkeit zu erhöhen.

Neben den Vorteilen bei den Hebefunktionen der Luftfederbälge gibt es zum Beispiel auch die Möglichkeit einer besonders intelligenten Steuerung der Auffüllreihenfolge der Verbraucherkreise -dies gegebenenfalls in Abweichung zu dem anhand von Fig. 4 beschriebenen Ablaufdiagramm zur Beschreibung einer Erstbefüllung. Beispielsweise kann für eine bestimmte Situation eines schnellen Fahrzeugstarts auch zunächst ein Befüllen des Luftfedersystems 171 priorisiert werden, soweit sichergestellt ist, dass das Fahrzeug steht. Je nach Bedarf kann in den Verfahrensschritten S3, S5, S7 eine Freigabe "+" bzw. ein Entziehen der Freigabe "+" durch die ECU an die ECAS bzw. die des Luftfedersystems 171 anders gestaltet werden. Für einen raschen Fahrzeugstart kann zum Beispiel zuerst ein Auffüllen der Bremsbehälter erfolgen bis eine Warnlampe erlischt und der Federspeicher gelöst werden kann. In dem Fall kann dann das Fahrzeug bei Bedarf schon losfahren. Wie anhand von Fig. 4 beschrieben, kann dann ein Auffüllen der Bälge 71 der Luftfedern bis auf ein Normalniveau folgen. In dem Fall hat das Fahrzeug bereits im Verfahrensschritt S4 eine voll zur Verfügung stehende Luftfederung. Danach kann ein Auffüllen der Bremsbehälter bis auf den Öffnungsdruck der zweiten Prioritätsventilanordnung 120 erfolgen. Schließlich kann dann das Auffüllen der Luftfederbehälter, zum Beispiel des ersten Luftbehälters 73, erfolgen. Durch weiteren Kompressorbetrieb kann das Auffüllen aller Behälter aller Verbraucherkreise bis auf einen Abschaltdruck vorgenommen werden. Wie zuvor erläutert, hat es sich dabei als vorteilhaft erwiesen, dass ein Öffnungsdruck der zweiten Prioritätsventilanordnung 120 über dem Öffnungsdruck der Schutzventile 24, 28 der weiteren Verbraucherkreise liegt, um zunächst ein Befüllen der weiteren Verbraucherkreise zu priorisieren.

## Patentansprüche

1. Druckluftversorgungssystem (110, 210) für wenigstens einen ersten Druckluftverbraucherkreis (170) eines Fahrzeugs, insbesondere für ein Luftfedersystem (171), aufweisend:
- eine zu dem ersten Druckluftverbraucherkreis (170) führende erste Druckluftleitung (14),
- eine Verteilerleitung (18) an die weiteren Verbraucherkreise anschließbar sind, und
- eine erste Prioritätsventilanordnung (160), die zwischen der ersten Druckluftleitung (14) und der Verteilerleitung (18) angeschlossen ist,
**gekennzeichnet durch**
- eine zweite Prioritätsventilanordnung (120), die zwischen der ersten Druckluftleitung (14) und einem dem ersten Druckluftverbraucherkreis (170) zugeordneten ersten Luftbehälter (73) angeschlossen ist.

2. Druckluftversorgungssystem (110, 210) nach Anspruch 1 **dadurch gekennzeichnet, dass** die erste Prioritätsventilanordnung (160) in einer zwischen der ersten Druckluftleitung (14) und der Verteilerleitung (18) angeschlossenen ersten Verbindungsleitung (161) angeschlossen ist.

3. Druckluftversorgungssystem (110, 210) nach Anspruch 1 oder 2 **dadurch gekennzeichnet, dass** die zweite Prioritätsventilanordnung (120) in einer, insbesondere unmittelbar, zwischen der ersten Druckluftleitung (14) und dem dem ersten Druckluftverbraucherkreis (170) zugeordneten ersten Luftbehälter (73) angeschlossenen zweiten Verbindungsleitung (121) angeschlossen ist.

4. Druckluftversorgungssystem (110, 210) nach einem der Ansprüche 1 bis 3 **dadurch gekennzeichnet, dass**
- die erste Prioritätsventilanordnung (160) ein erstes Überströmventil (16), insbesondere mit optionaler Rückströmung, aufweist und/oder
- die zweite Prioritätsventilanordnung (120) ein zweites Überströmventil (20), insbesondere mit optionaler Rückströmung, aufweist.

5. Druckluftversorgungssystem (110, 210) nach einem der Ansprüche 1 bis 4 **dadurch gekennzeichnet, dass**
- die erste Prioritätsventilanordnung (160) ein erstes Überströmventil (16) mit einer das erste Überströmventil (16) unmittelbar umgehenden ersten Bypassleitung (162) aufweist, wobei die erste Bypassleitung (162) ein zum ersten Überströmventil (16) pneumatisch parallel geschaltetes erstes Bypass-Rückschlagventil (17) aufweist, das in Gegenstrom zum ersten Überströmventil (16) durchströmbar ist, und/oder
- die zweite Prioritätsventilanordnung (120) ein zweites Überströmventil (20) mit einer das zweite Überströmventil (20) unmittelbar umgehenden zweiten Bypassleitung (122) aufweist, wobei die zweite Bypassleitung (122) ein zum zweiten Überströmventil (20) pneumatisch parallel geschaltetes zweites Bypass-Rückschlagventil (21) aufweist, das in Gegenstrom zum zweiten Überströmventil (20) durchströmbar ist.

6. Druckluftversorgungssystem (110, 210) nach einem der Ansprüche 1 bis 5 **dadurch gekennzeichnet, dass**
- ein erstes Überströmventil (16) der ersten Prioritätsventilanordnung (160) hysteresefrei ausgebildet ist, und/oder
- ein zweites Überströmventil (20) der zweiten Prioritätsventilanordnung (120) hysterese-frei ausgebildet ist.

7. Druckluftversorgungssystem (110, 210) nach einem der Ansprüche 1 bis 6 **dadurch gekennzeichnet, dass** die erste und/oder zweite Prioritätsventilanordnung (160, 120) einen Öffnungsdruck aufweist, der über einem Arbeitsdruck des ersten Druckluftverbraucherkreises (170) liegt.

8. Druckluftversorgungssystem (110, 210) nach einem der Ansprüche 1 bis 7 **dadurch gekennzeichnet, dass** die zweite Prioritätsventilanordnung (120) einen Öffnungsdruck aufweist, der über einem Maximaldruck des ersten Druckluftverbraucherkreises (170), insbesondere des Luftfedersystems (171), liegt.

9. Druckluftversorgungssystem (110, 210) nach einem der Ansprüche 1 bis 8 **dadurch gekennzeichnet, dass** ein Trenn-Rückschlagventil (80) zwischen einem Eingang der ersten Prioritätsventilanordnung (160) und einem Steuerventil des ersten Druckluftverbraucherkreises (170), insbesondere in der ersten Druckluftleitung (14), angeschlossen ist.

10. Druckluftversorgungssystem (110, 210) nach einem der Ansprüche 1 bis 9 **dadurch gekennzeichnet, dass** wenigstens die zweite Prioritätsventilanordnung (120) Teil eines separaten an das Druckluftversorgungssystem lösbar anschließbaren Prioritätsgerätes (101,201) ist, das aufweist:
- einen Zuführungsanschluss (E), der eingangsseitig derart ausgebildet ist, dass ein Lufttrocknerteil (2) und/oder die erste Prioritätsventilanordnung (160) anschließbar ist;
- einen ersten Abführungsanschluss (A1), der ausgangsseitig derart ausgebildet ist, dass der erste Druckluftverbraucherkreis (170) anschließbar ist;
- einen zweiten Abführungsanschluss (A2), der ausgangsseitig derart ausgebildet ist, dass der erste Luftbehälter (73) anschließbar ist.

11. Druckluftversorgungssystem (110, 210) nach einem der Ansprüche 1 bis 10 **dadurch gekennzeichnet, dass** ein Trenn-Rückschlagventil (80) Teil eines Prioritätsgerätes (101, 201) ist und zwischen einem Zuführungsanschluss (E) und einem ersten und/oder zweiten Abführungsanschluss (A1, A2) des Prioritätsgerätes (101, 201) angeschlossen ist.

12. Druckluftversorgungssystem (110, 210) nach Anspruch 10 oder 11 **dadurch gekennzeichnet, dass** die erste Prioritätsventilanordnung (160) Teil des Prioritätsgerätes (201) ist und zwischen dem Zuführungsanschluss (E) und einem dritten Abführungsanschluss (A3) angeschlossen ist.

13. Druckluftsystem (100, 200) mit einem Druckluftversorgungssystem (110, 210), nach einem der Ansprüche 1 bis 12, aufweisend:
- ein Lufttrocknerteil (2) mit einem Lufttrockner (4) in einer Druckluftversorgungsleitung (3), wobei an die Druckluftversorgungsleitung (3) angeschlossen ist:
- die zum ersten Druckluftverbraucherkreis führende erste Druckluftleitung (14), insbesondere darüber die zweite Prioritätsventilanordnung (120) über eine zweite Verbindungsleitung (121), und
- die erste Prioritätsventilanordnung (160) über eine erste Verbindungsleitung (161).

14. Druckluftsystem (100, 200) nach Anspruch 13 mit dem ersten Druckluftverbraucherkreis (170), insbesondere mit einem Luftfedersystem (171), und mit dem wenigstens einen weiteren Verbraucherkreis, wobei
der erste Druckluftverbraucherkreis (170) eine Anzahl von Luftfedern aufweist, insbesondere einen Balg (71) und ein Luftfederventil (70) aufweist, und
der wenigstens eine weitere Verbraucherkreis wenigstens einen Bremskreis aufweist, **dadurch gekennzeichnet, dass**
der erste Luftbehälter (73) und die Anzahl von Luftfedern an die erste Druckluftleitung (14) angeschlossen sind.

15. Verfahren zur Steuerung eines Druckluftversorgungssystems (110, 210) für einen ersten Druckluftverbraucherkreis (170) eines Fahrzeugs, insbesondere für ein Luftfedersystem (171), und/oder zur Steuerung eines Druckluftsystems (100, 200), insbesondere zur Steuerung eines Druckluftversorgungssystems (110, 210) nach einem der Ansprüche 1 bis 12 und/oder eines Druckluftsystems (100, 200) nach Anspruch 13 oder 14, aufweisend die Schritte:
- Speisen (S4) des ersten Druckluftverbraucherkreises mit Druckluft,
- Auffüllen (S8) zumindest eines dem ersten Druckluftverbraucherkreis zugeordneten Luftbehälters (73) mit Druckluft,
**dadurch gekennzeichnet, dass**
- das Auffüllen (S8) des Luftbehälters (73) über eine zweite Prioritätsventilanordnung (120) erfolgt, wobei:
erst nach Erreichen eines vorgegebenen Druckes im ersten Druckluftverbraucherkreis (170) und/oder den weiteren Verbraucherkreisen ein Auffüllen (S8) möglich wird, und
ein Auffüllen (S8) des Luftbehälters unmittelbar aus der zum Speisen des ersten Druckluftverbraucherkreises (170) vorgesehenen Druckluft erfolgt.

16. Verfahren nach Anspruch 15, sequentiell aufweisend die Schritte:
- Speisen (S2) eines Bremskreises mit Druckluft, insbesondere teilweises Auffüllen eines einem Bremskreis zugeordneten Bremsbehälters mit Druckluft;
- Speisen (S4) des ersten Druckluftverbraucherkreises (170) mit Druckluft;
- weiteres Auffüllen (S6) eines dem Bremskreis zugeordneten Bremsbehälters mit Druckluft bis auf einen Maximaldruck, insbesondere bis auf den Öffnungsdruck der zweiten Prioritätsventilanordnung (120);
- Auffüllen (S8) zumindest des dem ersten Druckluftverbraucherkreis (170) zugeordneten Luftbehälters (73), insbesondere weiterer Luftbehälter (S9), bis auf einen Abschaltdruck mit Druckluft.

17. Verfahren nach Anspruch 15 oder 16 **dadurch gekennzeichnet, dass** ein Luftfederventil (70) des ersten Druckluftverbraucherkreises (170) ein Freigabesignal (+) zum Öffnen von einer Steuereinheit (46) erhält (S3), insbesondere für den Fall einer ausreichenden Speisung eines Bremskreises mit Druckluft, oder ein Sperrsignal (-) zur Öffnung von einer Steuereinheit (46) erhält, insbesondere für den Fall einer nicht ausreichenden Speisung eines Bremskreises mit Druckluft.

## Claims

1. Compressed air supply system (110, 210) for at least one first compressed air consumer circuit (170) of a vehicle, in particular for an air spring system (171), having:
- a first compressed air line (14) which leads to the first compressed air consumer circuit (170),
- a distributor line (18), to which further consumer circuits can be connected, and
- a first priority valve arrangement (160) which is connected between the first compressed air line (14) and the distributor line (18),
**characterized by**
- a second priority valve arrangement (120) which is connected between the first compressed air line (14) and a first air reservoir (73) which is assigned to the first compressed air consumer circuit (170).

2. Compressed air supply system (110, 210) according to Claim 1, **characterized in that** the first priority valve arrangement (160) is connected in a first connecting line (161) which is connected between the first compressed air line (14) and the distributor line (18).

3. Compressed air supply system (110, 210) according to Claim 1 or 2, **characterized in that** the second priority valve arrangement (120) is connected in a second connecting line (121) which is connected, in particular directly, between the first compressed air line (14) and the first air reservoir (73) which is assigned to the first compressed air consumer circuit (170).

4. Compressed air supply system (110, 210) according to one of Claims 1 to 3, **characterized in that**
- the first priority valve arrangement (160) has a first overflow valve (16), in particular with optional return flow, and/or
- the second priority valve arrangement (120) has a second overflow valve (20), in particular with optional return flow.

5. Compressed air supply system (110, 210) according to one of Claims 1 to 4, **characterized in that**
- the first priority valve arrangement (160) has a first overflow valve (16) with a first bypass line (162) which directly bypasses the first overflow valve (16), the first bypass line (162) having a first bypass check valve (17) which is pneumatically connected in parallel to the first overflow valve (16) and can be flowed through in counterflow with respect to the first overflow valve (16), and/or
- the second priority valve arrangement (120) has a second overflow valve (20) with a second bypass line (122) which directly bypasses the second overflow valve (20), the second bypass line (122) having a second bypass check valve (21) which is pneumatically connected in parallel to the second overflow valve (20) and can be flowed through in counterflow with respect to the second overflow valve (20).

6. Compressed air supply system (110, 210) according to one of Claims 1 to 5, **characterized in that**
- a first overflow valve (16) of the first priority valve arrangement (160) is of hysteresis-free configuration, and/or
- a second overflow valve (20) of the second priority valve arrangement (120) is of hysteresis-free configuration.

7. Compressed air supply system (110, 210) according to one of Claims 1 to 6, **characterized in that** the first and/or second priority valve arrangement (160, 120) have/has an opening pressure which lies above an operating pressure of the first compressed air consumer circuit (170).

8. Compressed air supply system (110, 210) according to one of Claims 1 to 7, **characterized in that** the second priority valve arrangement (120) has an opening pressure which lies above a maximum pressure of the first compressed air consumer circuit (170), in particular of the air spring system (171).

9. Compressed air supply system (110, 210) according to one of Claims 1 to 8, **characterized in that** a separating check valve (80) is connected between an inlet of the first priority valve arrangement (160) and a control valve of the first compressed air consumer circuit (170), in particular in the first compressed air line (14).

10. Compressed air supply system (110, 210) according to one of Claims 1 to 9, **characterized in that** at least the second priority valve arrangement (120) is part of a separate priority unit (101, 201) which can be connected releasably to the compressed air supply system and has:
- a feed connector (E) which is configured on the inlet side in such a way that an air dryer part (2) and/or the first priority valve arrangement (160) can be connected;
- a first discharge connector (A1) which is configured on the outlet side in such a way that the first compressed air consumer circuit (170) can be connected;
- a second discharge connector (A2) which is configured on the outlet side in such a way that the first air reservoir (73) can be connected.

11. Compressed air supply system (110, 210) according to one of Claims 1 to 10, **characterized in that** a separating check valve (80) is part of a priority unit (101, 201) and is connected between a feed connector (E) and a first and/or second discharge connector (A1, A2) of the priority unit (101, 201).

12. Compressed air supply system (110, 210) according to Claim 10 or 11, **characterized in that** the first priority valve arrangement (160) is part of the priority unit (201) and is connected between the feed connector (E) and a third discharge connector (A3).

13. Compressed air system (100, 200) having a compressed air supply system (110, 210), according to one of Claims 1 to 12, having:
- an air dryer part (2) with an air dryer (4) in a compressed air supply line (3), the following being connected to the compressed air supply line (3):
- the first compressed air line (14) which leads to the first compressed air consumer circuit, in particular via this the second priority valve arrangement (120) via a second connecting line (121), and
- the first priority valve arrangement (160) via a first connecting line (161).

14. Compressed air system (100, 200) according to Claim 13 having the first compressed air consumer circuit (170), in particular having an air spring system (171), and having the at least one further consumer circuit,
the first compressed air consumer circuit (170) having a number of air springs, in particular having a bellows (71) and an air spring valve (70), and
the at least one further consumer circuit having at least one brake circuit, **characterized in that** the first air reservoir (73) and the number of air springs are connected to the first compressed air line (14).

15. Method for controlling a compressed air supply system (110, 210) for a first compressed air consumer circuit (170) of a vehicle, in particular for an air spring system (171), and/or for controlling a compressed air system (100, 200), in particular for controlling a compressed air supply system (110, 210) according to one of Claims 1 to 12 and/or a compressed air system (100, 200) according to Claim 13 or 14, having the steps:
- feeding (S4) of the first compressed air consumer circuit with compressed air,
- filling (S8) of at least one air reservoir (73) which is assigned to the first compressed air consumer circuit with compressed air,
**characterized in that**
- the filling (S8) of the air reservoir (73) takes place via a second priority valve arrangement (120), filling (S8) becoming possible only after a predefined pressure is reached in the first compressed air consumer circuit (170) and/or the further consumer circuits, and
filling (S8) of the air reservoir taking place directly from the compressed air which is provided for feeding the first compressed air consumer circuit (170).

16. Method according to Claim 15, sequentially having the following steps:
- feeding (S2) of a brake circuit with compressed air, in particular partial filling of a brake reservoir which is assigned to a brake circuit with compressed air;
- feeding (S4) of the first compressed air consumer circuit (170) with compressed air;
- further filling (S6) of a brake reservoir which is assigned to the brake circuit with compressed air up to a maximum pressure, in particular up to the opening pressure of the second priority valve arrangement (120);
- filling (S8) of at least the air reservoir (73) which is assigned to the first compressed air consumer circuit (170), in particular of further air reservoirs (S9), with compressed air up to a switch-off pressure.

17. Method according to Claim 15 or 16, **characterized in that** an air spring valve (70) of the first compressed air consumer circuit (170) receives (S3) an enable signal (+) for opening from a control unit (46), in particular for the case of sufficient feeding of a brake circuit with compressed air, or receives a block signal (-) for opening from a control unit (46), in particular for the case of insufficient feeding of a brake circuit with compressed air.

## Revendications

1. Système (110, 210) d'alimentation en air comprimé pour au moins un circuit (170) de consommateurs d'air comprimé d'un véhicule, en particulier pour un système (171) d'amortisseurs pneumatiques, le système présentant :
un premier conduit (14) d'air comprimé qui conduit au premier circuit (170) de consommateurs d'air comprimé,
un conduit de répartition (18) auquel les autres circuits de consommateurs peuvent être raccordés et
un premier ensemble (160) raccordé entre le premier conduit (14) d'air comprimé et le conduit de répartition (18),
**caractérisé par**
un deuxième ensemble (120) de soupape de priorité raccordé entre le premier conduit (14) d'air comprimé et un premier réservoir d'air (73) associé au premier circuit (170) de consommateurs d'air comprimé.

2. Système (110, 210) d'alimentation en air comprimé selon la revendication 1, **caractérisé en ce que** le premier ensemble (160) de soupape de priorité est raccordé dans un premier conduit de raccordement (161) raccordé entre le premier conduit (14) d'air comprimé et le conduit de répartition (18).

3. Système (110, 210) d'alimentation en air comprimé selon les revendications 1 ou 2, **caractérisé en ce que** le deuxième ensemble (120) de soupape de priorité est raccordé dans un deuxième conduit de liaison (121) raccordé en particulier indirectement entre le premier conduit (14) d'air comprimé et le premier récipient d'air (73) associé au premier circuit (170) de consommateurs d'air comprimé.

4. Système (110, 210) d'alimentation en air comprimé selon l'une des revendications 1 à 3, **caractérisé en ce que** le premier ensemble (160) de soupape de priorité présente une première soupape de débordement (16), en particulier dotée facultativement d'un écoulement de retour, et/ou **en ce que** le deuxième ensemble (120) de soupape de priorité présente une première soupape de débordement (20), en particulier dotée facultativement d'un écoulement de retour.

5. Système (110, 210) d'alimentation en air comprimé selon l'une des revendications 1 à 4, **caractérisé en ce que** le premier ensemble (160) de soupape de priorité présente une première soupape de débordement (16) dotée d'un conduit de dérivation (162) qui contourne indirectement la première soupape de débordement (16), le premier conduit de dérivation (162) présentant une première soupape anti-retour de contournement (17) raccordée pneumatiquement en parallèle à la première soupape de débordement (16) et qui peut être traversée à contre-courant de la première soupape de débordement (16) et/ou
le deuxième ensemble (120) de soupape de priorité présente une deuxième soupape de débordement (20) qui présente un deuxième conduit de dérivation (122) qui contourne directement la deuxième soupape de débordement (20), le deuxième conduit de dérivation (122) présentant une deuxième soupape anti-retour de contournement (21) raccordée pneumatiquement en parallèle par rapport à la deuxième soupape de débordement (20) et pouvant être traversée à contre-courant par rapport à la deuxième soupape de débordement (20).

6. Système (110, 210) d'alimentation en air comprimé selon l'une des revendications 1 à 5, **caractérisé en ce qu'**une première soupape de débordement (16) du premier ensemble (160) de soupape de priorité est exempte d'hystérèse et/ou **en ce qu'**une deuxième soupape de débordement (20) du deuxième ensemble (120) de soupape de priorité est configurée sans hystérèse.

7. Système (110, 210) d'alimentation en air comprimé selon l'une des revendications 1 à 6, **caractérisé en ce que** le premier et/ou le deuxième ensemble (160, 120) de soupape de priorité présentent une pression d'ouverture située au-dessus de la pression de travail du premier circuit (170) de consommateurs d'air comprimé.

8. Système (110, 210) d'alimentation en air comprimé selon l'une des revendications 1 à 7, **caractérisé en ce que** le deuxième ensemble (120) de soupape de priorité présente une pression d'ouverture située au-dessus de la pression maximale du premier circuit (170) de consommateurs d'air comprimé et en particulier du système (171) d'amortisseurs pneumatiques.

9. Système (110, 210) d'alimentation en air comprimé selon l'une des revendications 1 à 8, **caractérisé en ce qu'**une soupape anti-retour de séparation (80) est raccordée entre l'entrée du premier ensemble (160) de soupape de priorité et une soupape pilote du premier circuit (170) de consommateurs d'air comprimé, en particulier dans le premier conduit (14) d'air comprimé.

10. Système (110, 210) d'alimentation en air comprimé selon l'une des revendications 1 à 9, **caractérisé en ce qu'**au moins le deuxième ensemble (120) de soupape de priorité fait partie d'un appareil prioritaire séparé (101, 201) qui peut être raccordé de manière libérable au système d'alimentation en air comprimé et qui présente :
un raccordement d'amenée (E) dont l'entrée est configurée de manière à pouvoir raccorder une partie (2) de séchoir d'air et/ou le premier ensemble (160) de soupape de priorité,
un premier raccordement d'évacuation (A1) dont la sortie est configurée de manière à pouvoir être raccordée au premier circuit (170) de consommateurs d'air comprimé et
un deuxième raccordement d'évacuation (A2) dont la sortie est configurée de manière à pouvoir être raccordée au premier récipient d'air (73).

11. Système (110, 210) d'alimentation en air comprimé selon l'une des revendications 1 à 10, **caractérisé en ce qu'**une soupape (80) fait partie d'un appareil de priorité (101, 201) et est raccordée entre un raccordement d'amenée (E) et un premier et/ou un deuxième raccordement d'évacuation (A1, A2) de l'appareil prioritaire (101, 201).

12. Système (110, 210) d'alimentation en air comprimé selon les revendications 10 ou 11, **caractérisé en ce que** le premier ensemble (160) de soupape de priorité fait partie de l'appareil de priorité (201) et est raccordé entre le raccordement d'amenée (E) et un troisième raccordement d'évacuation (A3).

13. Système (100, 200) d'air comprimé présentant un système (110, 210) d'alimentation en air comprimé selon l'une des revendications 1 à 12 et :
une partie (2) de séchoir d'air dotée d'un séchoir d'air (4) prévu dans un conduit (3),
le premier conduit (14) d'air comprimé qui conduit au premier circuit de consommateur d'air comprimé, en particulier le deuxième ensemble (120) de soupape de priorité par l'intermédiaire d'un deuxième conduit de liaison (121) et
le premier ensemble (160) de soupape de priorité par un premier conduit de liaison (161)
étant raccordé au conduit (3).

14. Système (100, 200) d'air comprimé selon la revendication 13, présentant le premier circuit (170) de consommateurs d'air comprimé, en particulier un système (171) d'amortisseurs pneumatiques et le ou les autres circuits de consommateurs,
le premier circuit (170) de consommateurs d'air comprimé présentant plusieurs amortisseurs pneumatiques, en particulier un soufflet (71) et une soupape (70) d'amortisseurs pneumatiques et
le ou les autres circuits de consommateurs présentent au moins un circuit de freinage,
**caractérisé en ce que**
le premier récipient d'air (73) et les différents amortisseurs pneumatiques sont raccordés au premier conduit (14) d'air comprimé.

15. Procédé de commande d'un système (110, 210) d'alimentation en air comprimé pour un premier circuit (170) de consommateurs d'air comprimé de véhicule, en particulier pour un système (171) d'amortisseurs pneumatiques et/ou pour la commande d'un système (100, 200) d'air comprimé, en particulier pour la commande d'un système (110, 210) d'alimentation en air comprimé selon l'une des revendications 1 à 12 et/ou d'un système (100, 200) d'air comprimé selon les revendications 13 ou 14, le procédé comportant les étapes qui consistent à :
alimenter (S4) en air comprimé le premier circuit de consommateurs d'air comprimé,
remplir (S8) d'air comprimé au moins un récipient (73) d'air comprimé associé au premier circuit de consommateurs d'air comprimé,
**caractérisé en ce que**
le remplissage (S8) du récipient (73) d'air s'effectue par l'intermédiaire d'un deuxième ensemble (120) de soupape de priorité,
**en ce que** le remplissage (S8) n'est possible qu'après qu'une pression prédéterminée a été atteinte dans le premier circuit (170) de consommateurs d'air comprimé et/ou dans les autres circuits de consommateurs et
le remplissage (S8) du récipient d'air s'effectue directement avec l'air comprimé prévu pour alimenter le premier circuit (170) de consommateurs d'air comprimé.

16. Procédé selon la revendication 15, présentant les étapes successives suivantes :
alimenter (S2) en air comprimé un circuit de chauffage et en particulier remplir en partie d'air comprimé un récipient de frein associé au circuit de freinage,
alimenter (S4) en air comprimé le premier circuit (170),
poursuivre le remplissage (S6) en air comprimé d'un récipient de freinage associé au circuit de freinage jusqu'à une pression maximale, en particulier jusqu'à la pression d'ouverture du deuxième ensemble (120) de soupape de priorité et
remplir (S8) en air comprimé au moins le récipient (73) d'air associé au premier circuit (170) de consommateurs d'air comprimé, et en particulier un autre récipient (S9) d'air comprimé, jusqu'à une pression de débranchement.

17. Procédé selon les revendications 15 ou 16, **caractérisé en ce que** la soupape (70) d'amortisseurs pneumatiques du premier circuit (170) de consommateurs d'air comprimé reçoit (S3) un signal de libération (+) d'ouverture d'une unité de commande (46), en particulier au cas où l'alimentation d'un circuit de freinage en air comprimé est suffisante, ou un signal de blocage (-) d'ouverture d'une unité de commande (46), en particulier au cas où l'alimentation d'un circuit de freinage en air comprimé n'est pas suffisante.
